# EUROPEAN PATENT APPLICATION

(11) **EP 4 412 227 A1**
(43) Date of publication of application: **07.08.2024**
(21) Application number: 22874529.5
(22) Date of filing: 31.08.2022
(51) Int. Cl.: H04N 21/437, H04N 21/6377, G06F 3/0484, H04N 21/2387

(54) **IMMERSIVE-MEDIA DATA PROCESSING METHOD, APPARATUS, DEVICE, STORAGE MEDIUM AND PROGRAM PRODUCT**

(30) Priority: 29.09.2021 CN 202111149860
(71) Applicant: Tencent Technology (Shenzhen) Company Limited, Shenzhen, Guangdong, 518057 (CN)
(72) Inventor: HU, Ying, Shenzhen, Guangdong 518057 (CN)
(74) Representative: Gunzelmann, Rainer
(86) International application number: PCT/CN2022/116102
(87) International publication number: WO 2023/051138

(57) **Abstract**

Disclosed are an immersive-media data processing method, apparatus, device, storage medium, and program product, the method comprising: in response to an interaction operation directed at first immersive media content, generating an interaction feedback message corresponding to the interaction operation; the interaction feedback message carrying a service key field, the service key field being used to describe a service event indicated by the interaction operation; sending the interaction feedback message to a server, causing the server to determine, on the basis of the service key field in the interaction feedback message, the service event indicated by the interaction operation; and causing the server, on the basis of the service event indicated by the interaction operation, to obtain second immersive media content used for responding to the interaction operation; receiving second immersive media content returned by the server.

## Description

### RELATED APPLICATION

This application is based on and claims priority to Chinese Patent Application No. 202111149860.8 filed on September 29, 2021, which is incorporated herein by reference in its entirety.

### FIELD OF THE TECHNOLOGY

This application relates to the technical field of computers, and in particular to a method, apparatus and device for processing immersive media data, a storage medium and a program product.

### BACKGROUND OF THE DISCLOSURE

Immersive media refer to media contents that can bring an immersive experience to business objects (such as users). According to the Degree of Freedom (DoF) of the business objects (such as users) when the business objects consume the media contents, immersive media can be divided into 3DoF media, 3DoF+ media and 6DoF media.

In the process of immersive media consumption, the video client and the server can conduct a session by transmitting an interaction feedback message. For example, the video client can feed back the interaction feedback message used for describing user position information (for example, user position) to the server, so that the video client can receive the media content returned by the server based on the user position information.

In related technologies, in the process of immersive media consumption, the interaction feedback message only contains the user position information, so that the type of fed-back information is single when the video client and the server conduct a session, which reduces the accuracy of the media content acquired by the video client in the interaction feedback process.

### SUMMARY

The embodiments of this application provide a method, apparatus and computer device for processing immersive media data, a computer-readable storage medium and a computer program product, which can enrich the type of the interaction feedback information and improve the accuracy of the media content acquired by the video client in the interaction feedback process.

An embodiment of this application provides a method for processing immersive media data, including:
generating an interaction feedback message corresponding to an interaction operation in response to the interaction operation aiming at a first immersive media content, the interaction feedback message carrying a business key field, the business key field being used for describing a business event indicated by the interaction operation;
transmitting the interaction feedback message, the interaction feedback message being used for determining the business event indicated by the interaction operation, and acquiring a second immersive media content used for responding to the interaction operation based on the business event indicated by the interaction operation; and
receiving the second immersive media content returned.

An embodiment of this application provides a method for processing immersive media data, including:
receiving an interaction feedback message, the interaction feedback message being generated in response to an interaction operation aiming at a first immersive media content, the interaction feedback message carrying a business key field, the business key field being used for describing a business event indicated by the interaction operation;
determining the business event indicated by the interaction operation based on the business key field in the interaction feedback message, and acquiring a second immersive media content used for responding to the interaction operation based on the business event indicated by the interaction operation; and
returning the second immersive media content.

An embodiment of this application provides an apparatus for processing immersive media data, including:
a message generation module, configured to generate an interaction feedback message corresponding to an interaction operation in response to the interaction operation aiming at a first immersive media content, the interaction feedback message carrying a business key field, the business key field being used for describing a business event indicated by the interaction operation;
a message transmitting module, configured to transmit the interaction feedback message, the interaction feedback message being used for determining the business event indicated by the interaction operation, and acquiring a second immersive media content used for responding to the interaction operation based on the business event indicated by the interaction operation; and
a content receiving module, configured to receive the second immersive media content returned.

An embodiment of this application provides an apparatus for processing immersive media data, including:
a message receiving module, configured to receive an interaction feedback message, the interaction feedback message being generated in response to an interaction operation aiming at a first immersive media content, the interaction feedback message carrying a business key field, the business key field being used for describing a business event indicated by the interaction operation;
a content acquisition module, configured to determine the business event indicated by the interaction operation based on the business key field in the interaction feedback message, and acquire a second immersive media content used for responding to the interaction operation based on the business event indicated by the interaction operation; and
a content returning module, configured to return the second immersive media content.

An embodiment of this application provides a computer device, including: a processor and a memory,
the processor being connected to the memory, where the memory is configured to store a computer program, and the computer program, when executed by the processor, enables the computer device to execute the method for processing immersive media data according to the embodiment of this application.

An embodiment of this application provides a computer-readable storage medium, the computer-readable storage medium storing a computer program, the computer program being adapted to be loaded and executed by a processor to enable a computer device with the processor to execute the method for processing immersive media data according to the embodiment of this application.

An embodiment of this application provides a computer program product, the computer program product including computer instructions, the computer instructions being stored in a computer-readable storage medium. The processor of the computer device reads the computer instructions from the computer-readable storage medium and the processor executes the computer instructions to enable the computer device to execute the method for processing immersive media data according to the embodiment of this application.

In the embodiment of this application, the interaction feedback message corresponding to the interaction operation is generated and transmitted in response to the interaction operation aiming at the first immersive media content. Since the interaction feedback message carries the business key field used for describing the business event indicated by the interaction operation, the business event indicated by the interaction operation can be determined based on the business key field in the interaction feedback message, and the second immersive media content used for responding to the interaction operation can be acquired based on the business event indicated by the interaction operation. Since the business event indicated by the interaction operation can correspond to different types, the interaction operation here can not only include operations related to the user position (for example, user position change), but also include other operations aiming at the currently played-back immersive media content (for example, zooming operation). Therefore, through the business key field carried in the interaction feedback message, types of business events can be fed back. In this way, the immersive media content in response to the interaction operation can be determined based on these different types of business events, rather than relying on the user position information only, thus enriching the type of the interaction feedback message and improving the accuracy of the media content acquired by the video client in the interaction feedback process.

### BRIEF DESCRIPTION OF THE DRAWINGS

FIG. 1 is an architecture diagram of a panoramic video system according to an embodiment of this application.
FIG. 2 is a schematic diagram of 3DoF according to an embodiment of this application.
FIG. 3 is an architecture diagram of a volumetric video system according to an embodiment of this application.
FIG. 4 is a schematic diagram of a 6DoF according to an embodiment of this application.
FIG. 5 is a schematic diagram of 3DoF+ according to an embodiment of this application.
FIG. 6 is a schematic architecture diagram of a system 300 for processing immersive media data according to an embodiment of this application.
FIG. 7 is a flowchart of a method for processing immersive media data according to an embodiment of this application.
FIG. 8 is a flowchart of a method for processing immersive media data according to an embodiment of this application.
FIG. 9 is a schematic interaction diagram of a method for processing immersive media data according to an embodiment of this application.
FIG. 10 is a schematic structural diagram of an apparatus for processing immersive media data according to an embodiment of this application.
FIG. 11 is a schematic structural diagram of an apparatus for processing immersive media data according to an embodiment of this application.
FIG. 12 is a schematic structural diagram of a computer device according to an embodiment of this application.
FIG. 13 is a schematic structural diagram of a data processing system according to an embodiment of this application.

### DESCRIPTION OF EMBODIMENTS

The technical solutions in the embodiments of this application will be clearly and completely described in the following with reference to the accompanying drawings in the embodiments of this application. Apparently, the described embodiments are merely some rather than all of the embodiments of this application. All other embodiments obtained by a person skilled in the art based on the embodiments of this application without making creative efforts shall fall within the scope of protection of this application.

An embodiment of this application provides a technology for processing immersive media data. The so-called immersive media refer to media files that can provide immersive media contents so that the business objects immersed in the media contents can obtain visual, auditory and other sensory experiences in the real world. Immersive media can be divided into 3DoF media, 3DoF+ media and 6DoF media according to the degree of freedom of business objects when consuming media contents. Common 6DoF media include multi-view video and point cloud media. Immersive media contents include video contents expressed in a 3-Dimension (3D) space in various forms, such as 3D video contents expressed in a spherical form. For example, immersive media contents may be Virtual Reality (VR) video contents, panoramic video contents, spherical video contents, 360-degree video contents or volumetric video contents. In addition, immersive media contents also include audio contents synchronized with video contents represented in the 3D space.

Panoramic videos/images refer to spherical videos or images with a maximum of 360 degrees of image range that can be provided according to the viewing direction or window of the business object after the scene is shot by a plurality of cameras, stitched and mapped. Panoramic videos/images are typical immersive media that provide a three degrees of freedom (3DoF) experience.

Visual volumetric video-based coding media (V3C volumetric media) refer to immersive media that are captured from visual contents of 3D space, provide 3DoF+and 6DoF viewing experiences, are coded as traditional videos and contain volumetric video type tracks during file packing, including, for example, multi-view videos, video coding point cloud, etc.

Multi-view videos can also be called multi-view-point videos, which refer to videos with texture information (color information, etc.) and depth information (spatial distance information, etc.) of the scene taken from ma plurality of angles by using a plurality of camera arrays. Multi-view/multi-view-point videos, also known as free-view/free-view-point videos, are immersive media that provide a six degrees of freedom (6DoF) experience.

Point cloud is a set of randomly distributed discrete points in space that represent the spatial structure and surface properties of 3D objects or scenes. Each point in the point cloud has at least 3D position information, and may also have color, material or other information according to different application scenarios. Typically, each point in the point cloud has the same number of additional attributes. The point cloud can flexibly and conveniently express the spatial structure and surface properties of 3D objects or scenes, so they are widely applied in scopes including virtual reality games, Computer Aided Design (CAD), Geography Information System (GIS), Automatic Navigation System (ANS), digital cultural heritage, free view broadcasting, 3D immersive remote presentation 3D reconstruction of biological tissues and organs, etc. Means to acquire the point cloud mainly include generation by computer, 3D laser scanning, 3D photogrammetry, etc.

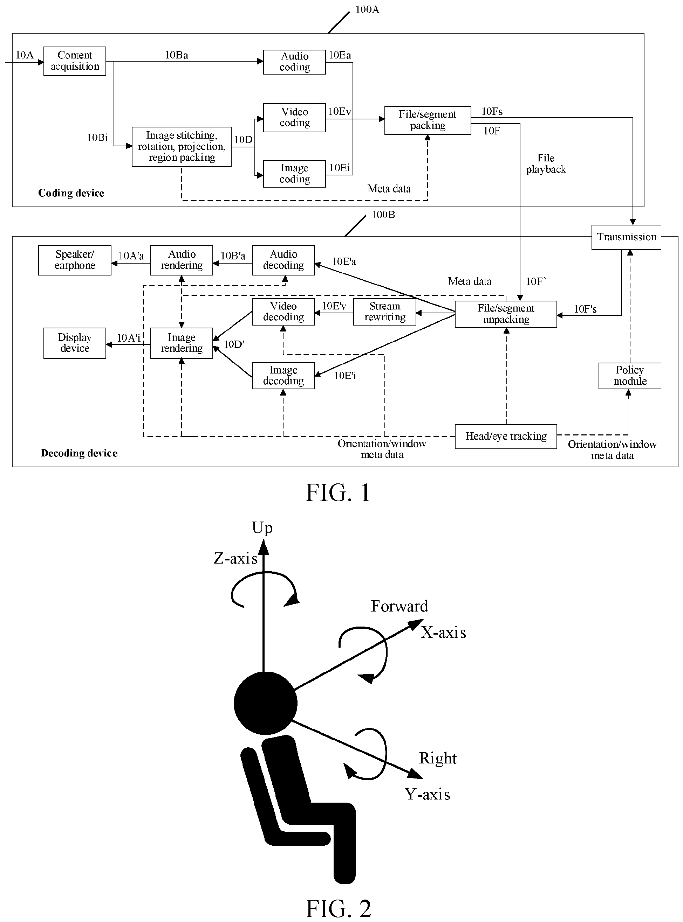

Please refer to FIG. 1, which is an architecture diagram of a panoramic video system according to an embodiment of this application. Referring to FIG. 1, the panoramic video system may include a coding device (for example, coding device 100A) and a decoding device (for example, decoding device 100B). The coding device may refer to a computer device used by a panoramic video provider. The computer device may be a terminal (such as a Personal Computer (PC), or a smart mobile device (such as a smart phone)), or a server. The decoding device may refer to a computer device used by a panoramic video user. The computer device may be a terminal (such as a PC, a smart mobile device (such as a smart phone), or a VR device (such as a VR HMD or VR glasses)). A data processing process of a panoramic video includes a data processing process on a coding device side and a data processing process on a decoding device side.

The data processing process on the coding device side mainly includes (1) an acquisition and production process of media contents of the panoramic video; and (2) a coding and file packing process of the panoramic video. The data processing process on the decoding device side mainly includes (1) a file unpacking and decoding process of the panoramic video; and (2) a rendering process of the panoramic video. In addition, a transmission process of the panoramic video is involved between the coding device and the decoding device, which may be performed based on various transmission protocols. The transmission protocols here may include, but are not limited to, Dynamic Adaptive Streaming over HTTP (DASH) protocol, HTTP Live Streaming (HLS) protocol, Smart Media Transport Protocol (SMTP), Transmission Control Protocol (TCP), etc.

The following will respectively introduce in detail the various processes involved in the data processing process of the panoramic video with reference to FIG. 1.

### Data processing process on coding device side

### (1) Acquisition and production process of media contents of panoramic video

### 1) Acquisition process of media contents of panoramic video

The media contents of the panoramic video are acquired by capturing the sound-vision scene of the real world through capture devices. In some embodiments, the capture devices may refer to hardware components in the coding device. For example, the capture devices refer to a microphone, a camera, a sensor and the like of the terminal. In other embodiments, the capture devices may also be hardware devices connected to the coding device, such as cameras connected to a server, which are used for providing the coding device with services of acquiring the media contents of the panoramic video. The capture devices may include, but are not limited to, audio devices, camera devices and sensing devices. The audio devices may include audio sensors, microphones, etc. The camera devices may include ordinary cameras, stereo cameras, light field cameras, etc. The sensing devices may include laser devices, radar devices, etc. The number of the capture devices may be more than one. These capture devices are deployed at some specific positions in real space to simultaneously capture audio contents and video contents from different angles in the space. The captured audio contents and video contents are synchronized in time and space. In the embodiment of this application, the media contents of the 3D space that are acquired by the capture devices deployed at specific positions and used for providing a 3DoF viewing experience are referred to as the panoramic video.

For example, referring to FIG. 1, a sound-vision scene 10A of the real world may be captured by a plurality of audio sensors and a group of camera arrays in the coding device 100A, or by a camera device connected to the coding device 100A and having a plurality of cameras and sensors. The acquisition results may be a set of digital image/video signals 10Bi (i.e. video contents) and digital audio signals 10Ba (i.e. audio contents). The cameras here usually cover all directions around the center point of the camera array or camera device, so the panoramic video can also be called a 360-degree video.

### (2) Production process of media contents of panoramic video

It is to be understood that the production process of the media contents of the panoramic video involved in the embodiment of this application may be understood as the production process of the contents of the panoramic video. The captured audio contents themselves are contents adapted to be subjected to the audio coding of the panoramic video. The captured video contents can become video coding contents adapted to be subjected to the video coding of the panoramic video only after a series of production processes, which may include:
① Stitching. Since the captured video contents are captured by the capture devices at different angles, stitching refers to stitching the video contents from these angles into a complete video that can reflect the 360-degree visual panorama of the real space, that is, the stitched video is a spherical video expressed in the 3D space. Or, the captured images are stitched to obtain a spherical image in the 3D space.
② Rotation. It is a processing operation in the production process. Each video frame in the spherical video obtained through stitching is a spherical image on the unit sphere based on the global coordinate axis. Rotation refers to the rotation of the unit sphere on the global coordinate axis. The angle of rotation is used for representing the angle of rotation required for the conversion from the local coordinate axis to the global coordinate axis. The local coordinate axis of the unit sphere is the axis of the rotated coordinate system. It is to be understood that if the local coordinate axis and the global coordinate axis are the same, no rotation is required.
③ Projection. Projection refers to the process of mapping a 3D video (or a rotated 3D video) formed through stitching onto a 2-dimension (2D) image. The 2D image formed through projection is called projected image. Projection methods may include, but are not limited to, Longitude and latitude map projection, and regular hexahedron projection.
④ Region-wise packing. The projected image may be coded directly, or the projected image may be coded after region-wise packing. As found in practice, in the data processing process of immersive media, the region-wise packing of the 2D projected image and then coding can greatly improve the efficiency of video coding of immersive media. Therefore, region-wise packing technology is widely applied to the video processing process of immersive media. The so-called region-wise packing refers to the process of converting the projected image by region. The region-wise packing process converts the projected image into the packed image. A region-wise packing process includes dividing the projected image into a plurality of mapped regions, then converting the plurality of mapped regions to obtain a plurality of packed regions, and mapping the plurality of packed regions to a 2D image to obtain a packed image. The mapped regions refer to regions divided in the projected image before region-wise packing. The packed regions refer to regions in the packed image after region-wise packing. The conversion process may include, but are not limited to, mirroring, rotation, rearrangement, up-sampling, down-sampling, change of resolution of regions, movement, etc.

For example, referring to FIG. 1, the coding device 100A may stitch, (possibly) rotate, project and map images belonging to the same time instance in the digital image/video signal 10Bi to a packed image 10D.

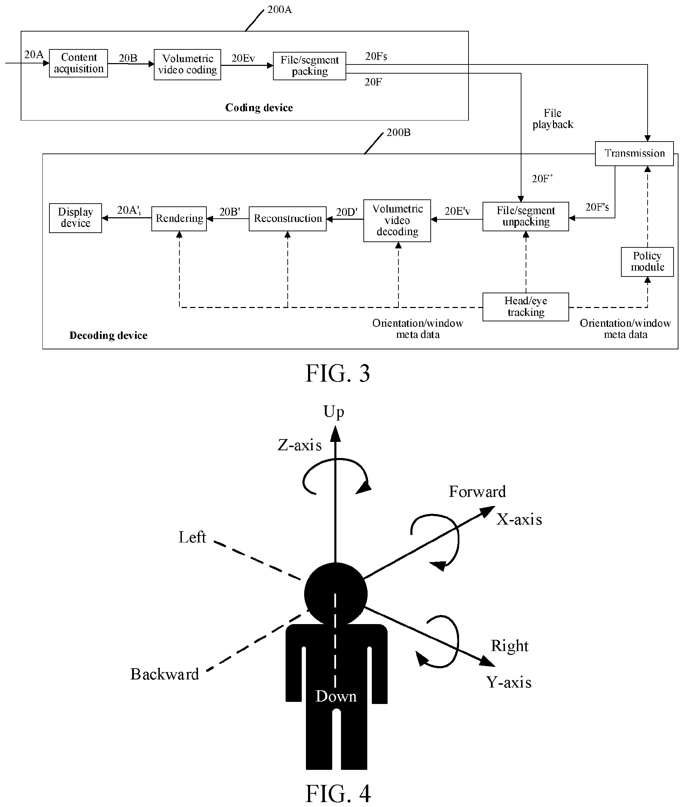

It is to be understood that, after the panoramic video obtained through the above acquisition and production process is processed by the coding device and transmitted to the decoding device for corresponding data processing, the business object on the decoding device side can only view the 360-degree video information by performing some specific actions (such as head rotation), that is, the panoramic video is immersive media that provide 3DoF. Please also refer to FIG. 2, which is a schematic diagram of 3DoF according to an embodiment of this application. Referring to FIG. 2, 3DoF refers to that the business object is fixed at the center of a 3D space, and the head of the business object rotates along the X axis, Y axis and Z axis to view the images provided by the media contents. In the embodiment of this application, users who consume immersive media (such as panoramic videos and volumetric videos) can be collectively referred to as business objects.

### (2) Coding and file encapsulation process of panoramic video

The captured audio contents may be directly coded to form an audio stream of the panoramic video. After the above production process ①-④ (② may be excluded), the packed image is coded to obtain the video stream of the panoramic video. The audio stream and video stream are packed in a file container according to the file format of the panoramic video (such as ISO Based Media File Format (ISOBMFF)) to form a media file asset of the panoramic video. The media file asset may be a media file of the panoramic video formed by media files or media segments. According to the file format requirement of the panoramic video, Media Presentation Description (MPD) is used for recording the meta data of the media file asset of the panoramic video. The meta data here is the general name of the information related to the presentation of the panoramic video. The meta data may include the description information of the media content, the description information of the window, the signaling information related to the presentation of the media content, etc. Referring to FIG. 1, the coding device stores the media presentation description information and media file asset formed after the data processing process.

For example, referring to FIG. 1, the coding device 100A may perform audio coding on the captured digital audio signal 10Ba to obtain an audio stream 10Ea. At the same time, it can perform video coding on the packed image 10D to obtain a video stream 10Ev, or it can perform image coding on the packed image 10D to obtain a coded image 10Ei. Subsequently, the coding device 100A may combine the coded image 10Ei, video stream 10Ev and/or audio stream 10Ea into a media file 10F for file playback or a segment sequence 10Fs containing one initialization segment and a plurality of media segments for streaming transmission according to a specific media file format (such as ISOBMFF). The media file 10F and segment sequence 10Fs both are media file assets of the panoramic video. In addition, a file packer in the coding device 100A may also add the meta data to the media file 10F or the segment sequence 10Fs. For example, the meta data here may include projection information and region-wise packing information, which will help the subsequent decoding device render the packed image obtained after decoding. Subsequently, the coding device 100A may use a specific transmission mechanism (such as DASH or SMTP) to transmit the segment sequence 10Fs to the decoding device 100B, and transmit the media file 10F to the decoding device 100B, too. The decoding device 100B may be an Omnidirectional Media Application Format (OMAF) player.

### Data processing process on decoding device side:

### (3) File unpacking and decoding process of panoramic video

The decoding device may adaptively and dynamically obtain the media file asset and corresponding media presentation description information of the panoramic video from the coding device through the recommendation of the coding device or according to the requirement of the business object on the decoding device side. For example, the decoding device may determine the direction and position of the business object according to the tracking information of the head/eye of the business object, and then dynamically request the coding device to obtain the corresponding media file asset based on the determined direction and position. The media file asset and media presentation description information are transmitted from the coding device to the decoding device through a transmission mechanism (such as DASH or Smart Media Transport (SMT)). The file unpacking process on the decoding device side is opposite to the file packing process on the coding device side. The decoding device unpacks the media file asset according to the requirement of the panoramic video file format (for example, ISOBMFF) to obtain the audio stream and video stream. The decoding process on the decoding device side is opposite to the coding process on the coding device side. The decoding device decodes the audio stream to restore the audio content. The decoding device decodes the video stream to restore the video content.

For example, referring to FIG. 1, the media file 10F output by the file packer in the coding device 100A is the same as the media file 10F' input by the file unpacker in the decoding device 100B. The file unpacker performs file unpacking on the media file 10F' or the received segment sequence 10F's, extracts the coded stream, including audio stream 10E'a, video stream 10E'v and coded image 10E'i, and simultaneously parses the corresponding meta data. A window-related video may be carried in a plurality of tracks. Before decoding, these tracks may be combined into a single video stream 10E'v in stream rewriting. Then, the decoding device 100B may perform audio decoding on the audio stream 10E'a to obtain the audio signal 10B'a (that is, the restored audio content). It also performs video decoding on the video stream 10E'v, or performs image decoding on the coded image 10E'i to obtain the image/video signal 10D' (that is, the restored video content).

### (4) Rendering process of panoramic video

The decoding device renders the audio content obtained through audio decoding and the video content obtained through video decoding according to the meta data related to rendering in the media presentation description information. After rendering, the playback output of the image is realized. In particular, since the panoramic video is produced by adopting a 3DoF production technology, the decoding device mainly renders the image based on the current view point, parallax, depth information, etc. View point refers to the viewing position point of the business object, and parallax refers to the sight difference caused by the two eyes of the business object or the sight difference caused by movement.

The panoramic video system supports a data box, which refers to a data block or object containing meta data, that is, the data box contains the meta data of the corresponding media contents. The panoramic video may include a plurality of data boxes, for example, a Sphere Region Zooming Box, which contains the meta data used for describing sphere region zooming information, a 2D region zooming box, which contains the meta data used for describing 2D region zooming information, a region-wise packing box, which contains the meta data used for describing relevant information in the region-wise packing process, and so on.

For example, referring to FIG. 1, the decoding device 100B may project the packed image 10D' (i.e., image/video signal 10D') obtained through decoding onto a screen of a head-mounted display or any other display device based on the current viewing direction or window (i.e., viewing area), projection, spherical coverage, rotation, and the region-wise packing meta data parsed from the media file 10F' or segment sequence 10F'. Similarly, the audio signal 10B'a is rendered according to the current viewing direction (for example, through headphones or speakers). The current viewing direction is determined through head tracking and possibly eye tracking. Besides, in addition to being used by the renderer to render the appropriate part of the decoded video signal and audio signal, the current viewing direction may also be used by the video decoder and audio decoder for decoding optimization. In window-related transmission, the current viewing direction may also be transmitted to a policy module in the decoding device 100B. The policy module may determine the video track to be received according to the current viewing direction.

Please also refer to FIG. 3, which is an architecture diagram of a volumetric video system according to an embodiment of this application. Referring to FIG. 3, the volumetric video system may include a coding device (for example, coding device 200A) and a decoding device (for example, decoding device 200B). The coding device may refer to a computer device used by a volumetric video provider. The computer device may be a terminal (such as a PC or a smart mobile device (such as a smart phone), or a server. The decoding device may refer to a computer device used by a volumetric video user. The computer device may be a terminal (such as a PC, a smart mobile device (such as a smart phone), or a VR device (such as a VR HMD or VR glasses)). A data processing process of a volumetric video includes a data processing process on a coding device side and a data processing process on a decoding device side.

The data processing process on the coding device side mainly includes (1) an acquisition and production process of media contents of the volumetric video; and (2) a coding and file packing process of the volumetric video. The data processing process on the decoding device side mainly includes (1) a file unpacking and decoding process of the volumetric video; and (2) a rendering process of the volumetric video. In addition, a transmission process of the volumetric video is involved between the coding device and the decoding device, which may be performed based on various transmission protocols. The transmission protocols here may include, but are not limited to, DASH protocol, HLS protocol, SMTP protocol, TCP protocol, etc.

The following will respectively introduce in detail the various processes involved in the data processing process of the volumetric video with reference to FIG. 3.

### I. Data processing process on coding device side

### (1) Acquisition and production process of media contents of volumetric video

### 1) Acquisition process of media contents of volumetric video

The media contents of the volumetric video are acquired by capturing the sound-vision scene of the real world through capture devices. In some embodiments, the capture devices may refer to hardware components in the coding device. For example, the capture devices refer to a microphone, a camera, a sensor and the like of the terminal. In other embodiments, the capture devices may also be hardware devices connected to the coding device, such as cameras connected to a server, which are used for providing the coding device with services of acquiring the media contents of the volumetric video. The capture devices may include, but are not limited to, audio devices, camera devices and sensing devices. The audio devices may include audio sensors, microphones, etc. The camera devices may include ordinary cameras, stereo cameras, light field cameras, etc. The sensing devices may include laser devices, radar devices, etc. The number of the capture devices may be more than one. These capture devices are deployed at some specific positions in real space to simultaneously capture audio contents and video contents from different angles in the space. The captured audio contents and video contents are synchronized in time and space. In the embodiment of this application, the media contents of the 3D space that are acquired by the capture devices deployed at specific positions and used for providing multi-DoF (such as 3DoF+ or 6DoF) viewing experience are referred to as the volumetric video.

For example, description will be made by taking the acquisition of the media contents of the volumetric video as an example. Referring to FIG. 3, a vision scene 20A (including a vision scene of the real word or a synthesized vision scene) may be captured by a group of camera arrays connected to the coding device 200A, by a camera device connected to the coding device 200A and having a plurality of cameras and sensors, or by a plurality of virtual cameras. The acquisition results may be source volumetric data 20B (i.e., video contents of the volumetric video).

### 2) Production process of media contents of volumetric video

It is to be understood that the production process of the media contents of the volumetric video involved in the embodiment of this application may be understood as the production process of the contents of the volumetric video. The contents of the volumetric video here are mainly produced by the multi-view video, point cloud data, light field and other forms of contents captured by the cameras or camera arrays deployed at a plurality of positions. For example, the coding device may convert the representation of the volumetric video from 3D representation to 2D representation. The volumetric video here may contain geometric information, attribute information, placeholder map information, atlas data, etc. The volumetric video generally needs to be processed specifically before coding. For example, point cloud data need to be cut and mapped before coding. For example, before coding a multi-view video, it is generally necessary to group different views of the multi-view video to distinguish the main view from the auxiliary view in each group.

Exemplarily, ① the 3D representation data of the acquired and input volumetric video (i.e., the above point cloud data) are projected to a 2D plane, usually by means of orthogonal projection, perspective projection, or Equi-Rectangular Projection (ERP) projection. The volumetric video projected to the 2D plane is represented by the data of geometric components, placeholder components, and attribute components, where, the data of geometric components provide the position information of each point in the 3D space of the volumetric video. The data of attribute components provide the additional attribute (such as texture or material information) of each point of the volumetric video. The data of the placeholder components indicate whether the data in other components are related to the volumetric video.

② The component data of the 2D representation of the volumetric video are processed to generate a block. According to the position of the volumetric video represented in the geometric component data, the 2D plane region where the 2D representation of the volumetric video is located is divided into a plurality of rectangular regions with different sizes. A rectangular region represents a block. The block contains necessary information for back-projecting the rectangular region into the 3D space.
③ The blocks are packed to generate an atlas. The blocks are put into a 2D grid, and it is ensured that the effective parts of each block are not overlapped. The blocks generated by a volumetric video can be packed into one or more atlases;
40 The corresponding geometric data, attribute data and placeholder data are generated based on atlas data,. The atlas data, geometric data, attribute data and placeholder data are combined to form a final representation of the volumetric video in the 2D plane.

It is to be understood that in the content production process of the volumetric video, the geometric components are required, the placeholder components are conditionally required, and the attribute components are optionally required.

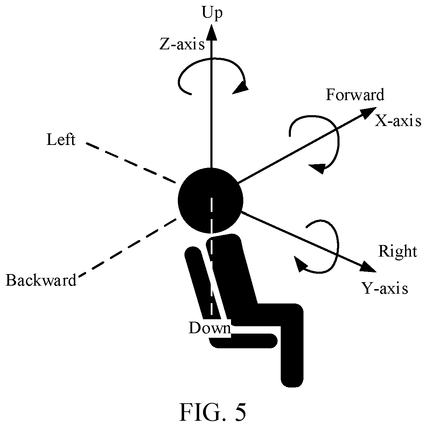

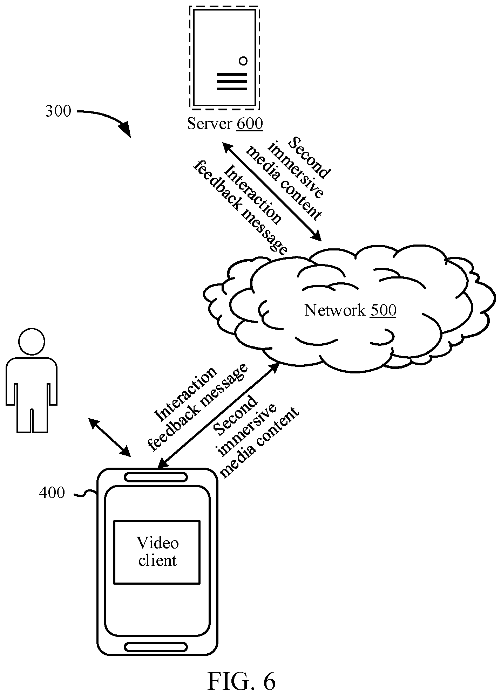

In addition, it is to be understood that, since the panoramic video can be captured by adopting the capture devices, such video is processed by the coding device and transmitted to the decoding device for corresponding data processing, the business object on the decoding device side needs to perform some specific actions (such as head rotation) to view the 360-degree video information, performing non-specific actions (such as head movement) cannot obtain corresponding video changes and the VR experience is poor, it is necessary to provide additional depth information matching with the panoramic video to enable the business object to obtain better immersion and better VR experience, which involves the 6DoF production technology. When the business object can move more freely in a simulated scene, it is called 6DoF. When the 6DoF production technology is used for producing the video contents of the volumetric video, generally light field cameras, laser devices, radar devices and the like are used as the capture devices to capture the point cloud data or light field data in space. Please also refer to FIG. 4, which is a schematic diagram of 6DoF according to an embodiment of this application. Referring to FIG. 4, 6DoF is divided into window 6DoF, omnidirectional 6DoF and 6DoF. Window 6DoF refers to that the rotation and movement of the business object in the X axis and Y axis are limited, and the translation in the Z axis is limited. For example, the business object cannot see the scene outside the window frame, and the business object cannot pass through the window. Omnidirectional 6DoF refers to that the rotation and movement of the business object in the X axis, Y axis and Z axis are limited. For example, the business object cannot freely pass through the 3D 360-degree VR content in the limited movement area. 6DoF refers to that the business object can translate freely along the X axis, Y axis and Z axis on the basis of 3DoF. For example, the business object can move freely in the 3D 360-degree VR content. Similar to 6DoF, there are 3DoF and 3DoF+ production technologies. FIG. 5 is a schematic diagram of 3DoF+ according to an embodiment of this application. Referring to FIG. 5, 3DoF+ refers to that when the virtual scene provided by immersive media has certain depth information, the head of the business object can move in a limited space based on 3DoF to view the images provided by the media contents. See FIG. 2 above for the schematic diagram of 3DoF, which will not be repeated here.

### (2) Coding and file packing process of volumetric video

The captured audio contents may be directly coded to form an audio stream of the volumetric video. The captured video contents may be directly coded to form a video stream of the volumetric video. It is to be understood that, If the 6DoF production technology is adopted, a specific coding method (such as point cloud compression based on traditional video coding) needs to be adopted in the video coding process. The audio stream and video stream are packed in a file container according to the file format of the volumetric video (such as ISOBMFF) to form a media file asset of the volumetric video. The media file asset may be a media file of the volumetric video formed by media files or media segments. According to the file format requirement of the volumetric video, Media Presentation Description (MPD) is used for recording the meta data of the media file asset of the volumetric video. The meta data here is the general name of the information related to the presentation of the volumetric video. The meta data may include the description information of the media content, the timing meta data information describing the mapping relationship between each view point group and the spatial position information of viewing the media contents, the description information of the window, the signaling information related to the presentation of the media contents, etc. Referring to FIG. 1, the coding device stores the media presentation description information and media file asset formed after the data processing process.

Exemplarily, the acquired audio is coded into a corresponding audio stream. The geometric information, attribute information and placeholder map information of the volumetric video may be coded by adopting the traditional video coding method, while the atlas data of the volumetric video may be coded by adopting the entropy coding method. Then, according to a certain format (such as ISOBMFF or HNSS), the coded media are packed in a file container and combined with the meta data describing the media content attributes and window meta data to form a media file or an initialization segment and a media segment according to a specific media file format.

For example, referring to FIG. 3, the coding device 200A performs volumetric video coding on one or more volumetric video frames in source volumetric video data 20B to obtain a coded VC3 stream 20Ev (i.e., video stream), including an atlas stream (i.e., a stream obtained after coding the atlas data), and at most one placeholder stream (i.e., a stream obtained after coding the placeholder map information), a geometric stream (i.e., a stream obtained after coding the geometric information), and zero or more attribute streams (i.e., a stream obtained after coding the attribute information). Subsequently, the coding device 200A may pack one or more coded streams into a media file 20F for local playback or a segment sequence 20Fs containing one initialization segment and a plurality of media segments for streaming transmission according to a specific media file format (such as ISOBMFF). In addition, a file packer in the coding device 200A may add the meta data to the media file 20F or the segment sequence 20Fs. Subsequently, the coding device 200A may use a certain transmission mechanism (such as DASH or SMTP) to transmit the segment sequence 20Fs to the decoding device 200B, and transmit the media file 20F to the decoding device 200B, too. The decoding device 200B here may be a player.

### II. Data processing process on decoding device side

### (3) File unpacking and decoding process of volumetric video

The decoding device may adaptively and dynamically obtain the media file asset and corresponding media presentation description information of the volumetric video from the coding device through the recommendation of the coding device or according to the requirement of the business object on the decoding device side. For example, the decoding device may determine the direction and position of the business object according to the tracking information of the head/eye of the business object, and then dynamically request the coding device to obtain the corresponding media file asset based on the determined direction and position. The media file asset and media presentation description information are transmitted from the coding device to the decoding device through a transmission mechanism (such as DASH or SMT). The file unpacking process on the decoding device side is opposite to the file packing process on the coding device side. The decoding device unpacks the media file asset according to the requirement of the volumetric video file format (for example, ISOBMFF) to obtain the audio stream and video stream. The decoding process on the decoding device side is opposite to the coding process on the coding device side. The decoding device decodes the audio stream to restore the audio content. The decoding device decodes the video stream to restore the video content.

For example, referring to FIG. 3, the media file 20F output by the file packer in the coding device 200A is the same as the media file 20F' input by the file unpacker in the decoding device 200B. The file unpacker performs file unpacking on the media file 20F' or the received segment sequence 20F', extracts the coded VC3 stream 20E'v, and parses the corresponding meta data. Then, it can perform volumetric video decoding on the VC3 stream 20E'v to obtain a video signal 20D' (i.e., the restored video content) after decoding.

### (4) Rendering process of volumetric video

The decoding device renders the audio content obtained through audio decoding and the video content obtained through video decoding according to the meta data related to rendering in the media presentation description information corresponding to the media file asset. After rendering, the playback output of the image is realized.

The volumetric video system supports a data box, which refers to a data block or object containing meta data, that is, the data box contains the meta data of the corresponding media contents. The volumetric video may include a plurality of data boxes, for example, an ISO Base Media File Format Box (ISOBMFF Box), which contains meta data used for describing the corresponding information during file packing.

For example, referring to FIG. 3, the decoding device 200B may reconstruct the decoded video signal 20D' based on the current viewing direction or window to obtain reconstructed volumetric video data 20B', and then may render the reconstructed volumetric video data 20B' and display on a screen of a head-mounted display or any other display device. The current viewing direction is determined through head tracking and possibly eye tracking. In window-related transmission, the current viewing direction may also be transmitted to a policy module in the decoding device 200B. The policy module may determine the video track to be received according to the current viewing direction.

Through the processes described in the embodiment corresponding to FIG. 1 above or the processes described in the embodiment corresponding to FIG. 3 above, the decoding device can dynamically acquire the media file asset corresponding to the immersive media from the coding device side. Since the media file asset is obtained after the coding device codes and packs the captured audio and video contents, after the decoding device receives the media file asset returned by the coding device, it is necessary to unpack the media file asset to obtain the corresponding audio and video streams, and then decode the audio and video streams to finally present the decoded audio and video contents to the business object. The immersive media here include, but are not limited to, panoramic videos and volumetric videos. The volumetric videos may include multi-view videos, Video-based Point Cloud Compression (VPCC) point cloud medias, and Geometry-based Point Cloud Compression (GPCC) point cloud media.

It is to be understood that when the business object is consuming immersive media, the decoding device and the coding device can continuously interact with each other. For example, the decoding device can feed back the status of the business object (for example, object position information) to the coding device, so that the coding device can provide the corresponding media file asset to the business object according to the content of the interaction feedback. In the embodiment of this application, the playable media contents (including audio contents and video contents) obtained after unpacking and decoding the media file asset of the immersive media can be collectively referred to as immersive media contents. For the decoding device, it can play back the immersive media contents restored from the obtained media file asset on a video playback interface. That is to say, one media file asset may correspond to one immersive media content. Therefore, in the embodiment of this application, the immersive media content corresponding to a first media file asset may be referred to as a first immersive media content, and the immersive media content corresponding to a second media file asset may be referred to as a second immersive media content. Other media file assets and corresponding immersive media contents may also be similarly named.

In order to support more interaction feedback scenarios, an embodiment of this application provides a method for indicating an immersive media interaction feedback message. For example, a video client may be run on a decoding device (such as a user terminal), and then the first immersive media content may be played back on a video playback interface of the video client. It is to be understood that the first immersive media content here is obtained after the first media file asset is unpacked and decoded by the decoding device, while the first media file asset is obtained after the relevant audio and video contents are coded and packed by the coding device (such as the server) in advance. In the process of playing back the first immersive media content, the decoding device may generate an interaction feedback message corresponding to an interaction operation in response to the interaction operation aiming at the first immersive media content. Here, the interaction feedback message carries a business key field used for describing a business event indicated by the interaction operation. The decoding device may transmit the interaction feedback message to the coding device so that the coding device can determine the business event indicated by the interaction operation based on the business key field in the interaction feedback message, and acquire a second media file asset used for responding to the interaction operation based on the business event indicated by the interaction operation. The second media file asset here is obtained after the coding device codes and packs the relevant audio and video contents in advance. Finally, the decoding device can receive the second media file asset returned by the coding device, unpack and decode the second media file asset to obtain a playable second immersive media content, and then play back the second immersive media content on its video playback interface. For the processes of unpacking and decoding the second media file asset, please refer to the relevant processes described in the embodiment corresponding to FIG. 1 above or the relevant processes described in the embodiment corresponding to FIG. 3.

In the embodiment of this application, the interaction operation here can not only include operations related to the user position (for example, user position change), but also include other operations aiming at the immersive media content (for example, zooming operation) currently played-back by the video client. Therefore, through the business key field carried in the interaction feedback message, the video client on the decoding device can feed back types of business events to the coding device. In this way, the coding device can determine the immersive media content in response to the interaction operation based on these different types of business events, rather than relying on the user position information only, thus enriching the type of the interaction feedback message and improving the accuracy of the media content acquired by the video client in the interaction feedback process.

In some embodiments, referring to FIG. 6, which is FIG. 6 is a schematic architecture diagram of a system 300 for processing immersive media data according to an embodiment of this application, in order to support an exemplary application, a terminal 400 is a decoding device provided with a video client, the terminal 400 is connected to a server 600 (i.e., encoding device) through a network 500, and the network 500 may be a wide area network, a local area network, or a combination thereof, and use wireless or wired links to realize data transmission.

The terminal 400 (video client) is configured to generate an interaction feedback message corresponding to an interaction operation in response to the interaction operation aiming at a first immersive media content. The interaction feedback message carries a business key field. The business key field is used for describing a business event indicated by the interaction operation.

It is further configured to transmit the interaction feedback message to the server 600.

The server 600 is configured to determine the business event indicated by the interaction operation based on the interaction feedback message, acquire a second immersive media content used for responding to the interaction operation based on the business event, and return the second immersive media content to the terminal 400.

The terminal 400 (video client) is further configured to receive and play back the second immersive media content returned.

Here, the server (for example, server 600) may be an independent physical server, a server cluster or a distributed system composed of a plurality of physical servers, and may also be a cloud server that provides cloud services, cloud databases, cloud computing, cloud functions, cloud storage, network services, cloud communications, middleware services, domain name services, security services, Content Delivery Network (CDN), and basic cloud computing servers for big data and artificial intelligence platforms. The terminal (such as terminal 400) may be, but is not limited to, a smart phone, a tablet, a laptop, a desktop computer, an intelligent voice interaction device (such as smart speaker), a smart appliance (such as smart TV), a smart watch, a car terminal or the like. The terminal and the server may be connected directly or indirectly through wired or wireless communication, which is not limited in the embodiment of this application.

In some embodiments, the terminal or the server can realize the method for processing immersive media data according to the embodiment of this application by running a computer program. For example, the computer program may be a native program or software module in an operating system. It may be a native application (APP), that is, a program that needs to be installed in the operating system to run. It may also be an applet, that is, a program that only needs to be downloaded to the browser environment to run. It may also be an applet that can be embedded into any APP. In short, the above computer program may be any form of application program, module or plug-in.

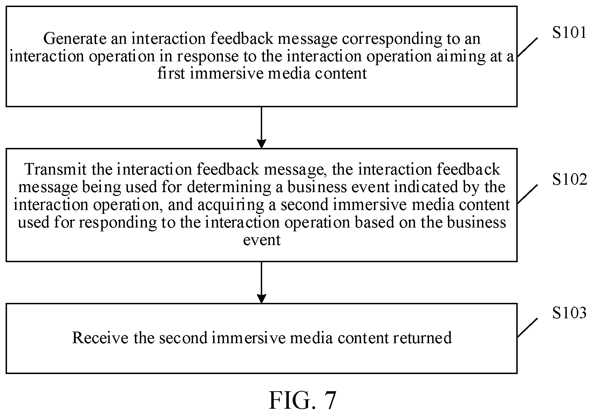

The method provided in the embodiment of this application can be applied to a server side (i.e., coding device side), a player side (i.e., decoding device side) and an intermediate node (e.g., SMT receiving entity or SMT sending entity) of the immersive media system. For the process of interaction feedback between the decoding device and the coding device, a reference may be made to the description of the embodiments corresponding to FIG. 7 to FIG. 9 below.

Please refer to FIG. 7, which is a flowchart of a method for processing immersive media data according to an embodiment of this application. This method may be performed by the decoding device in the immersive media system (for example, panoramic video system or volumetric video system). The decoding device may be the decoding device 100B in the embodiment corresponding to FIG. 1 above, the decoding device 200B in the embodiment corresponding to FIG. 3 above, or the terminal 400 in FIG. 6. The decoding device may be a user terminal integrated with a video client. The method may at least include steps S101-S103.

In step S101, an interaction feedback message corresponding to an interaction operation is generated in response to the interaction operation aiming at a first immersive media content.

Here, the interaction feedback message carries a business key field. The business key field is used for describing a business event indicated by the interaction operation. The business event includes at least one of the following: zooming event, switching event and position interaction event.

Exemplarily, after acquiring the first media file asset returned by the server, the video client on the user terminal may unpack and decode the first media file asset to obtain the first immersive media content, and then play back the first immersive media content in the video playback interface of the video client. The first immersive media content here refers to the immersive media content that the business object is currently viewing. The business object here may refer to the user who consumes the first immersive media content. For example, the first immersive media content may belong to an immersive video. The immersive video may be a video collection containing one or more immersive media contents. The embodiment of this application does not limit the number of the contents contained in the immersive video. For example, supposing that an immersive video provided by the server includes N immersive media contents, N is an integer greater than 1, and the N immersive media contents are respectively an immersive media content A1 associated with a scene P1, an immersive media content A2 associated with a scene P2,..., an immersive media content AN associated with a scene P1, the video client can acquire any one or more immersive media contents from the above N immersive media contents according to the recommendation of the server or the demand of the business object, such as the immersive media content A1. In this case, the immersive media content A1 can be used as the current first immersive media content.

It is to be understood that the immersive video may be a panoramic video. For example, the immersive video may be a volumetric video. The video type of the immersive video is not limited in the embodiment of this application.

In some embodiments, in the process of playing back the first immersive media content in the video playback interface of the video client, the video client may generate an interaction feedback message corresponding to an interaction operation in response to the interaction operation aiming at the first immersive media content which is currently being played back. It is to be understood that the interaction feedback message may also be called interaction feedback signaling, which can provide the interaction feedback between the video client and the server during immersive media consumption. For example, when the first immersive media content consumed is a panoramic video, the SMT receiving entity may periodically feed back the direction information of the virtual camera to the SMT sending entity to notify the direction of the current VR virtual camera. In addition, the corresponding direction information may also be transmitted when the Field Of View (FOV) changes. For another example, when the first immersive media content consumed is a volumetric video, the SMT receiving entity may periodically feed back the position of the virtual camera or the position and viewing direction of the business object to the SMT sending entity, so that the video client can acquire the corresponding media content. The SMT receiving entity and the SMT sending entity are intermediate nodes between the video client and the server.

In the embodiment of this application, the interaction operation refers to an operation performed by the business object aiming at the first immersive media content currently consumed, including but not limited to a zooming operation, a switching operation, and a position interaction operation. The zooming operation corresponds to a zooming event, and refers to an operation of reducing or enlarging the picture size of the first immersive media content. For example, the picture size of the immersive media content A1 can be enlarged by double-clicking the immersive media content A1. For another example, the picture size of the immersive media content A1 can be reduced or enlarged by double-pointing to different directions and simultaneously sliding and stretching the immersive media content A1. The switching operation here corresponds to a switching event, and may include a playback rate switching operation, an image quality switching operation (i.e., definition switching operation), a flipping operation, a content switching operation and other event-based triggering operations that are allowed to be predefined at the application layer, such as a click operation aiming at a target position in a picture, a triggering operation when the business object faces the target direction, and so on. The position interaction operation here corresponds to a position interaction event, and refers to an operation aiming at object position information (i.e. user position information) when the business object views the first immersive media content, such as the change of real-time position, the change of viewing direction, the change of viewing angle direction, and so on. In order to facilitate subsequent understanding and distinguishing, in the embodiment of this application, the corresponding position interaction operation is referred to as a first position interaction operation when the first immersive media content is a panoramic video; the corresponding position interaction operation is referred to as a second position interaction operation when the first immersive media content is a volumetric video. It is to be understood that the triggering modes of the zooming operation, switching operation and position interaction operation are not limited in the embodiment of this application.

It is to be understood that the interaction feedback message may carry a business key field used for describing a business event indicated by the interaction operation.

In some embodiments, the interaction feedback message may directly contain the business key field. The business key field here may include one or more (at least two) of a first key field, a second key field, a third key field and a fourth key field. The first key field is used for representing a zooming ratio in executing a zooming event indicated by a zooming operation when the interaction operation includes the zooming operation. The second key field is used for representing an event label and event status corresponding to a switching event indicated by a switching operation when the interaction operation includes the switching operation. The third key field is used for representing first object position information (for example, the real-time position, the viewing angle direction and the like of the business object) of the business object viewing the first immersive media content that belongs to a panoramic video when the interaction operation includes a first position interaction operation. The fourth key field is used for representing second object position information (for example, the real-time viewing direction of the business object) of the business object viewing the first immersive media content that belongs to a volumetric video when the interaction operation includes a second position interaction operation. Accordingly, it can be seen that the interaction feedback message corresponding to the interaction operation may include the zooming ratio, the event label and the event status. In a case of including the zooming ratio, the event label and the event status, it may further include first object position information or second object position information.

It is to be understood that one interaction feedback message may carry a business key field used for describing a business event indicated by one or more interaction operations. The number and type of the interaction operations corresponding to the interaction feedback message are not limited in the embodiment of this application.

It is to be understood that since the video type corresponding to the first immersive media content is different, the first position interaction operation and the second position interaction operation cannot exist at the same time. That is to say, in the same interaction feedback message, a valid third key field and a valid fourth key field cannot exist at the same time.

It is to be understood that the business key field carried in an interaction feedback message may include any one of the first key field, the second key field, the third key field, and the fourth key field. For example, when each interaction operation occurs, the video client generates a corresponding interaction feedback message. When the first immersive media content belongs to a panoramic video, the business key field carried in an interaction feedback message may include any one or more of the first key field, the second key field, and the third key field, such as the first key field and the third key field. Similarly, when the first immersive media content belongs to a volumetric video, the business key field carried in an interaction feedback message may include any one or more of the first key field, the second key field, and the fourth key field. For example, for a period of time, the business object has performed a zooming operation aiming at the above immersive media content A2, and the object position information of the business object has changed during the viewing of the immersive media content A2. For example, the business object walks while viewing. When the immersive media content A2 belongs to a volumetric video, the interaction feedback message generated in this case may contain both the first key field reflecting the zooming ratio and the fourth key field reflecting the second object position information. Therefore, the finally acquired second immersive media content is determined based on the zooming ratio and the second object position information, that is, the immersive media content responding to the interaction operation may be determined based on different types of business events, that is, combining a plurality of information dimensions to determine the media content can improve the accuracy of the media content acquired by the video client in the interaction feedback process.

In some embodiments, the above interaction feedback message may further contain an information identity field, which is used for representing the information type of the business event indicated by each interaction operation. For example, a field value of the information identity field may be the information name corresponding to each type of business event. In this way, when an interaction feedback message carries types of business events at the same time, the information type can be distinguished through the information identity field.

It is to be understood that the time of interaction feedback is not limited in the embodiment of this application, which may be agreed at the application layer according to the actual need. For example, the video client may immediately generate a corresponding interaction feedback message and transmit it to the server when it detects an interaction operation. In some embodiments, the video client may transmit the interaction feedback message to the server periodically. For example, the video client feeds back to the server every 30 seconds.

In some embodiments, the interaction feedback message may carry an interaction signaling table associated with the interaction operation. The interaction signaling table contains the business key field used for describing the business event indicated by the interaction operation. In other words, the interaction feedback message may redefine and reorganize many different types of business events by means of the interaction signaling table.

In some embodiments, in a scenario that the interaction operation is a triggering operation, the video client determines a first information type field of a business event indicated by the triggering operation in response to the triggering operation aiming at the first immersive media content, and records an operation timestamp of the triggering operation, The triggering operation here may refer to a contact operation or some specific non-contact operations aiming at the first immersive media content. For example, the triggering operation may include a zooming operation, a switching operation, etc. In some embodiments, the video client may add the first information type field and the operation timestamp to an interaction signaling table associated with the first immersive media content, and use the first information type field added to the interaction signaling table as the business key field used for describing the business event indicated by the interaction operation. Then, the video client may generate an interaction feedback message corresponding to the triggering operation based on the business key field and the operation timestamp in the interaction signaling table. The first information type field here may be used for representing the information type of the business event indicated by the triggering operation. It is to be understood that each triggering operation may correspond to an interaction signaling table. Therefore, the same interaction feedback message may include one or more interaction signaling tables. The number of the interaction signaling tables contained in the interaction feedback message is not limited in the embodiment of this application.

In some embodiments, a business event indicated by a zooming operation is a zooming event when the triggering operation includes the zooming operation, and a field mapped by the first information type field with a first field value is used for representing a zooming ratio in executing the zooming event when a field value of the first information type field corresponding to the zooming operation is the first field value.

In some embodiments, a business event indicated by a switching operation is a switching event when the triggering operation includes the switching operation, and a field mapped by the first information type field with a second field value is used for representing an event label and event status of the switching event when a field value of the first information type field corresponding to the switching operation is the second field value. The event status with a first status value is used for representing that the switching event is in an event trigger status when a status value of the event status is the first status value. The event status with a second status value is used for representing that the switching event is in an event end status when a status value of the event status is the second status value.

For the convenience of understanding, description will be made below by taking the SMT signaling message as an example. Please refer to Table 1, which is used for indicating the syntax of an interaction signaling table according to the embodiment of this application.

**Table 1**

| |
|---|
| ```
interaction_feedback_table() {  
table_id  
version  
length  
table_payload {  
table_type  timestamp  
if(table_type == 2){  
   zoom_ratio  
}  
if(table_type == 3){  
event_label  
event_trigger_flag
``` |
| ```
   reserved
}
}
}
``` |

The semantics of the syntax shown in Table 1 above are as follows: table_id is the signaling table identity field and is used for representing an identifier of each of the interaction signaling tables. version is the signaling table version field and is used for representing a version number of each of the interaction signaling tables. length is the signaling table length field and is used for representing a length of each of the interaction signaling tables. table_ type is the first information type field and is used for representing the information type carried in the interaction signaling table (for example, zooming event or switching event). timestamp is the operation timestamp and is used for representing the timestamp generated by the current triggering operation. UTC (Universal Time Coordinated) time may be used here. As shown in Table 1, when the field value of the first information type field (table_type) is the first field value (for example, 2), the field mapped by the first information type field is zoom_ratio, zoom_ratio indicates the ratio of the zooming behavior of the business object, that is, the zooming ratio in executing the zooming event (also called picture zooming information). In some embodiments, zoom_ratio may be in unit of 2-3. For example, if user 1 (i.e., business object) enlarges the immersive media content F1 (i.e., the first immersive media content), the corresponding interaction feedback message carries an interaction signaling table table_type==2, and zoom_ratio=16, that is, the current zooming ratio is 16*2-3=2 times. In some embodiments, zoom_ratio may also be used as the first key field described in the above alternative embodiments. As shown in Table 1, when the field value of the first information type field is the second field value (for example, 3), the field mapped by the first information type field is event_label and event_trigger_flag, event_label indicates the event label triggered by the interaction of the business object, and event_trigger_flag indicates the event status triggered by the interaction of the business objects. In some embodiments, whenevent_trigger_flagis 1 (the first state value), it indicates that the event is triggered (that is, the switching event is in the event trigger state); when event_trigger_flag is 0 (the second state value), it indicates the event is ended (that is, the switching event is in the event end status). For example, if user 2 (i.e., business object) clicks the content switch control in the video playback interface when viewing the immersive media content F2 (i.e., the first immersive media content), the corresponding interaction feedback message carries the interaction signaling table table_type==3, event_label="content switch" and event_trigger_flag=1, it indicates that user 2 has triggered the content switching operation and wants to switch the currently played-back immersive media content F2 to other immersive media content. In some embodiments, event_label and event_trigger_flag may also be used as the second key field described in the above alternative embodiments. In addition, reserved represents reserved byte bit.

The values of the first field value and the second field value, and the values of the first status value and the second status value are not limited in the embodiment of this application. It is to be understood that the embodiment of this application can support the R&D personnel to define the required switching events in the application layer in advance, and the content of the event label may be determined according to the immersive media content, which is not limited in the embodiment of this application. It is to be understood that relevant immersive media content needs to support customized switching events, so it is possible to trigger events in the subsequent interaction process. For example, when the above immersive media content F2 supports content switching, the corresponding content switching control will be displayed in the video playback interface where the immersive media content F2 is played back.

In some embodiments, in a scenario that the interaction operation is a position interaction operation, the embodiment of this application can also support carrying the object position information in the interaction feedback message. In this case, it can also be defined by means of the interaction signaling table. For example, when the video client detects the object position information of the business object viewing the first immersive media content, it uses the position interaction operation aiming at the object position information as the interaction operation in response to the first immersive media content, then may determine the second information type field of the business event indicated by the interaction operation, and may record the operation timestamp of the interaction operation. In some embodiments, it may add the second information type field and the operation timestamp to an interaction signaling table associated with the first immersive media content, and use the second information type field added to the interaction signaling table as the business key field used for describing the business event indicated by the interaction operation. Then, the video client may generate an interaction feedback message corresponding to the interaction operation based on the business key field and the operation timestamp in the interaction signaling table. It is to be understood that each position interaction operation may correspond to an interaction signaling table. Therefore, the same interaction feedback message may include one or more interaction signaling tables. However, the same interaction feedback message cannot contain both the interaction signaling table carrying the first object position information and the interaction signaling table carrying the second object position information. It is to be understood that if the video client regularly feeds back the object position information of the business object to the server, the object position information of the business object may or may not change within a period of time when the business object consumes the first immersive media content. When the object position information does not change, the server can still acquire the corresponding immersive media content based on the object position information. In this case, the acquired immersive media content may be the same as the first immersive media content. Similarly, in addition to the object position information, if the video client also feeds back other information to the server during this period, such as the zooming ratio in executing the zooming operation aiming at the first immersive media content, the server can acquire the corresponding immersive media content based on the object position information and the zooming ratio. In this case, the acquired immersive media content is different from the first immersive media content.

In some embodiments, a first type position field is used for describing position change information of the business object viewing the first immersive media content that belongs to a panoramic video when the first immersive media content is an immersive media content in an immersive video, the immersive video is a panoramic video, a field value of the second information type field corresponding to the object position information is a third field value and the second information type field with the third field value includes the first type position field.

In some embodiments, a second type position field is used for describing position change information of the business object viewing the first immersive media content that belongs to a volumetric video when the first immersive media content is an immersive media content in an immersive video, the immersive video is a volumetric video, a field value of the second information type field corresponding to the object position information is a fourth field value and the second information type field with the fourth field value includes the second type position field.

In some embodiments, refer to Table 2, which is used for indicating the syntax of an interaction signaling table according to an embodiment of this application.

**Table 2**

| |
|---|
| ```
interaction_feedback_table() {  
table_id  
version  
length  
table_payload {  
table_type  
timestamp  
if (table_type== 0) {
3DoF+_flag  
interaction_target  
interaction_type  
if(interaction_target == 1){  
   ClientRegion()  
}  
if(interaction_target == 2){  
   ClientRotation()  
}  
if(3DoF+_flag == 1 && interaction target == 3){  
   ClientPosition()  
   behavior_coefficient  
}  
}  
if(table_type == 1){  
   ClientPosition()  
   V3C_orientation()  
   last_processed_media_timestamp  
}  
}  
}
``` |

The semantics of the syntax shown in Table 2 above are as follows: table_id is the signaling table identity field and is used for representing an identifier of each of the interaction signaling tables. version is the signaling table version field and is used for representing a version number of each of the interaction signaling tables. length is the signaling table length field and is used for representing a length of each of the interaction signaling tables. table_ type is the second information type field and is used for representing the information type carried in the interaction signaling table (for example, first object position information or second object position information). timestamp is the operation timestamp and is used for representing the timestamp generated by the current position interaction operation. UTC time may be used here. As shown in Table 2, when the field value of table_type is 0 (i.e.,, third field value), the first type position field contained therein is as follow: 3DoF+_flag indicates 3DoF+ video content; interaction_target represents the interaction target field and indicates the target of the current interaction at the video client, including head-mounted device status (EA4D_status), object of interests of the business object and business object status (User_status), etc. interaction type represents the interaction type field, which is set to 0 in the embodiment of this application. For the value of interaction target field interaction_target, see Table 3, which is used for indicating the value table of an interaction target field according to an embodiment of this application.

**Table 3**

| Type | Value | Description |
|---|---|---|
| Null | 0 | The interaction target is empty, that is, there is no specific interaction target. |
| HMD_status | 1 | The interaction target is the head-mounted device status. |
| Object of interests | 2 | The interaction target is the status of object of interests of the business object. |
| User_status | 3 | The interaction target is the business object status. |

In combination with Table 3, please continue to refer to Table 2. When the value of the interaction target field is 1, it indicates that the interaction target is the head-mounted device status. Correspondingly, ClientRegion is the window information, indicating the size and screen resolution of the video client window. For the syntax, see Table 4, which is used for indicating the syntax of window information according to an embodiment of this application.

**Table 4**

| |
|---|
| ```
aligned(8) class ClientRegion (){
 signed int(32) Region_width_angle;
 signed int(32) Region_height_angle;
 unsigned int(16) Region_width_resolution;
 unsigned int(16) Region_height_resolution;
}
``` |

The semantics of the syntax shown in Table 4 above are as follows:
Region_width_angle indicates the transverse angle of the video client window, with an accuracy of 2-16 degrees and a value range of (- 90*216, 90*216). Region_height_angle indicates the longitudinal angle of the video client window, with an accuracy of 2-16 degrees and a value range of (- 90*216, 90*216). Region_width_resolution indicates the transverse resolution of the video client window, with a value range of (0, 216-1). Region_height_resolution indicates the horizontal resolution of the video client window, with a value range of (0, 216-1).

Please continue to refer to Table 2. When the value of the interaction target field is 2, it indicates the status of object of interests of the business object. Correspondingly, ClientRotation is the viewing direction and indicates the change of the real-time view angle of the business object relative to the initial view angle. For the syntax, see Table 5, which is used for indicating the syntax of a viewing direction according to an embodiment of this application.

**Table 5**

| |
|---|
| ```
aligned(8) class ClientRotation () {  
   unsigned int(8) 3D_rotation_type;  
   if(3D_rotation_type = 0){  
      signed int(32) rotation_yaw;  
      signed int(32) rotation_pitch;  
      signed int(32) rotation_roll;  
  }  
   if(3D_rotation_type = 1) {  
      float(32) rotation_x;  
      float(32) rotation_y;  
      float(32) rotation_z;  
      float(32) rotation_w;  
     }  
   }
``` |

The semantics of the syntax shown in Table 5 above are as follows: 3D_rotation_type indicates the representation type of rotation information. A value of this field being 0 indicates that the rotation information is given in the form of Euler angle. A value of this field being 1 indicates that the rotation information is given in the form of quaternion. The remaining values are reserved. rotation_yaw indicates the yaw angle along the x-axis of the real-time view angle of the business object relative to the initial view angle, with a value range of (-180*216, 180*216-1). rotation_pitch indicates the pitch angle along the y-axis of the real-time view angle of the business object relative to the initial view angle, with a value range of (-90*216, 90*216). rotation_roll indicates the rolling angle along the z-axis of the real-time view angle of the business object relative to the initial view angle, with a value range of (-180*216, 180*216-1). rotation_x, rotation_y, rotation_z and rotation_w indicate the values of the quaternion x, y, z and w components respectively, representing the rotation information of the real-time view angle of the business object relative to the initial view angle.

Please continue to see Table 2. When the value of the interaction target field is 3 and the value of 3DoF+_flag is 1, it indicates that the interaction target is the business object status. Correspondingly, ClientPosition is the real-time position of the business object, indicating the displacement of the business object relative to the initial position in the virtual scene. In a case of 3DoF (that is, the value of 3DoF+_flag is 0), the field values of all fields in the structure are 0. In a case of 3DoF+ (that is, the value of 3DoF+_flag is 1), the field values of all fields in the structure are non-zero and the value range is within the constrained range. behavior_coefficient defines an enlargement behavior coefficient. For the syntax of ClientPosition, see Table 6, which is used for indicating the syntax of a real-time position of the business object according to an embodiment of this application.

**Table 6**

| |
|---|
| ```
aligned(8) class ClientPosition () {
    signed int(16) position_x;
    signed int(16) position_y;
    signed int(16) position_z;
}
``` |

The semantics of the syntax shown in Table 6 above are as follows: position_x indicates the displacement along the x-axis of the real-time position of the business object relative to the initial position, with a value range of (-215, 215-1)mm. position_y indicates the displacement along the y-axis of the real-time position of the business object relative to the initial position, with a value range of (-215, 215-1)mm. position_z indicates the displacement along the z-axis of the real-time position of the business object relative to the initial position, with a value range of (-215, 215-1)mm.

In some embodiments, when the field value of table type is 0, the first type position field contained may be used as the third key field mentioned above.

Please continue to see Table 2. As shown in Table 2, when the field value of table type is 1 (that is, the fourth field value), a second type position field contained therein is as follow: ClientPosition indicates the current position of the business object in the global coordinate system. For the syntax, see Table 6 above. V3C_orientation indicates the viewing direction of the business object in the Cartesian coordinate system established at the current position. last_processed_media_timestamp indicates the timestamp of the last media unit that has been added to the decoder buffer. The SMT sending entity uses this field to determine the next media unit to be transmitted from the new asset (i.e., new immersive media content) of the volumetric video player. The next media unit is a media unit with a timestamp or serial number immediately following this timestamp. The SMT sending entity starts from the subsequent media timestamp and switches from transmitting the previous asset (determined according to the previous window) to transmitting the new asset (determined according to the new window) to reduce the delay of receiving the media content corresponding to the new window. For the syntax ofV3C_orientation, see Table 7, which is used for indicating the syntax of a real-time viewing angle of the business object according to an embodiment of this application.

**Table 7**

| |
|---|
| ```
aligned(8) class V3C_orientation () {
    signed int(32) dirx;
signed int(32) diry;
signed int(32) diry;
}
``` |

The semantics of the syntax shown in Table 7 above are as follows: dirx represents the coordinate of the viewing direction of the business object on the x-axis in the Cartesian coordinate system established by using the position of the business object as the origin. diry represents the coordinate of the viewing direction of the business object on the y-axis in the Cartesian coordinate system established by using the position of the business object as the origin. dirz represents the coordinate of the viewing direction of the business object on the z-axis in the Cartesian coordinate system established by using the position of the business object as the origin.

In some embodiments, when the field value of table_type is 1, the second type position field contained may be used as the fourth key field mentioned above.

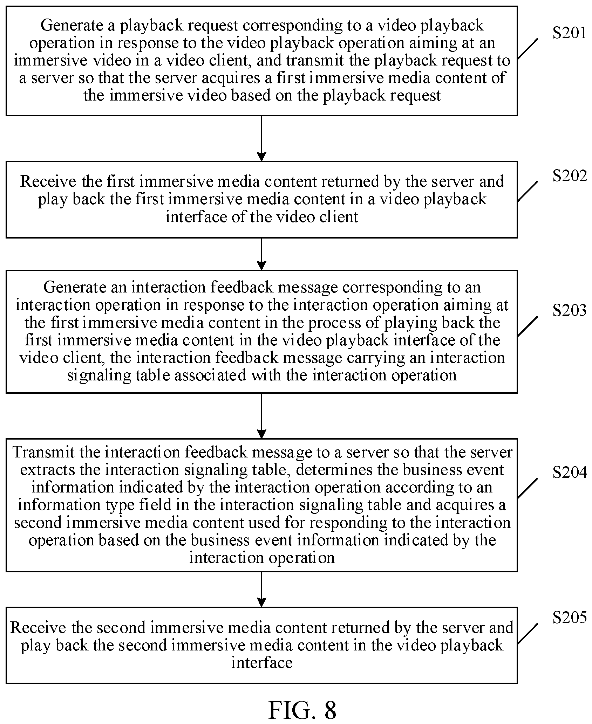

It is to be understood that the embodiment of this application may also combine the above Table 1 and Table 2 to obtain an interaction signaling table that can represent at least four information types, so that the interaction feedback message corresponding to the interaction operation can be generated based on the interaction signaling table. A reference may be made to step S203 in the embodiment corresponding to FIG. 8 below.

In step S102, the interaction feedback message is transmitted. The interaction feedback message is used for determining the business event indicated by the interaction operation, and acquiring a second immersive media content used for responding to the interaction operation based on the business event.

Here, the terminal transmits the interaction feedback message to a server so that the server determines the business event indicated by the interaction operation based on the business key field in the interaction feedback message, and acquires a second immersive media content used for responding to the interaction operation based on the business event indicated by the interaction operation.

Exemplarily, the video client may transmit the interaction feedback message to the server. After subsequently receiving the interaction feedback message, the server may determine the business event indicated by the interaction operation based on the business key field in the interaction feedback message, and then acquire a second media file asset corresponding to the second immersive media content used for responding to the interaction operation based on the business event indicated by the interaction operation. The second media file asset is obtained after the server codes and packs the relevant audio and video contents in advance, and corresponds to the second immersive media content. For the process of coding and packing the audio and video contents, a reference may be made to the relevant description in the embodiment corresponding to FIG. 1 or FIG. 3 above, which will not be repeated here. For example, when the interaction operation is a definition switching operation, the server may acquire a media file asset matching with the resolution according to the resolution indicated by the definition switching operation as the second media file asset used for responding to the definition switching operation.

In step S103, the second immersive media content returned is received.

Exemplarily, the video client may receive the second immersive media content returned by the server and play back the second immersive media content in the video playback interface. In combination with step S 102, it is to be understood that the server firstly acquires the media file asset corresponding to the second immersive media content based on the business event, that is, the second media file asset, and may return the second media file asset to the video client. Therefore, after the video client receives the second media file asset, it may unpack and decode the second media file asset according to the relevant description in the embodiment corresponding to FIG. 1 or FIG. 3 above, so as to obtain the second immersive media content that can be played back in the video playing interface of the video client. The unpacking and decoding processes will not be repeated here.

In some embodiments, please refer to FIG. 8, which is a flowchart of a method for processing immersive media data according to an embodiment of this application. This method may be performed by a decoding device in the immersive media system (for example, panoramic video system or volumetric video system). The decoding device may be the decoding device 100B in the embodiment corresponding to FIG. 1 above, or the decoding device 200B in the embodiment corresponding to FIG. 3 above. The decoding device may be a user terminal integrated with a video client. The method may at least include the following steps.

In step S201, a playback request corresponding to a video playback operation is generated in response to the video playback operation aiming at an immersive video in a video client, and the playback request is transmitted to a server so that the server acquires a first immersive media content of the immersive video based on the playback request.

Exemplarily, when a business object wants to experience an immersive video, the business object may request the corresponding immersive media content through a video client on a user terminal. For example, the video client may generate a playback request corresponding to a video playback operation in response to the video playback operation aiming at an immersive video in a video client, and may transmit the playback request to a server so that the server acquires a first media file asset corresponding to the first immersive media content of the immersive video based on the playback request. The first media file asset here refers to data obtained after the server performs processing such as coding and packing on the relevant audio and video contents.

In step S202, the first immersive media content returned by the server is received and the first immersive media content is played back in the video playback interface of the video client.

Exemplarily, after acquiring the first media file asset corresponding to the first immersive media content based on the playback request, the server may return the first media file asset to the video client, so that the video client can receive the first media file asset returned by the server, and perform processing such as unpacking and decoding on the first media file asset, thus obtaining the first immersive media content that can be played back in the video playing interface of the video client.

In step S203, in the process of playing back the first immersive media content in the video playback interface of the video client, an interaction feedback message corresponding to an interaction operation is generated in response to the interaction operation aiming at the first immersive media content. The interaction feedback message carries an interaction signaling table associated with the interaction operation.

Exemplarily, in the process of playing back the first immersive media content in the video playback interface of the video client, the video client may generate an interaction feedback message corresponding to an interaction operation in response to the interaction operation aiming at the first immersive media content. For example, the video client determines an information type field of the business event indicated by the interaction operation in response to the interaction operation aiming at the first immersive media content, and records an operation timestamp of the interaction operation. In some embodiments, it may add the information type field and the operation timestamp to an interaction signaling table associated with the first immersive media content, and use the information type field added to the interaction signaling table as the business key field used for describing the business event indicated by the interaction operation. Then, it may generate an interaction feedback message corresponding to the interaction operation based on the business key field and the operation timestamp in the interaction signaling table.

It is to be understood that the interaction operation here may include one or more of a zooming operation, a switching operation and a position interaction operation. The position interaction operation may be a first position interaction operation or a second position interaction operation.

In the embodiment of this application, the interaction feedback message may carry an interaction signaling table associated with the interaction operation. The information type field contained in the interaction signaling table can be used as the business key field used for describing the business event indicated by the interaction operation. The information type field may include a first information type field related to the triggering operation and a second information type field related to the position interaction operation. In the embodiment of this application, the first information type field and the second information type field are collectively referred to as the information type field.

It is to be understood that the embodiment of this application can combine the above Table 1 and Table 2 to obtain an interaction signaling table that can represent at least four information types. In this way, the interaction feedback messages of different information types can be integrated through the interaction signaling table without causing confusion due to the diversity of information types. Refer to Table 8, which is used for indicating the syntax of an interaction signaling table according to an embodiment of this application.

**Table 8**

| |
|---|
| ```
interaction_feedback_table() {  
table_id  
version  
length
``` |
| ```
table_payload {  
table_type  
timestamp  
if (table type == 0) {  
3DoF+_flag  
interaction_target  
interaction_type  
if(interaction _target == 1){  
   ClientRegion()  
}  
if(interaction_target == 2){  
   ClientRotation()  
}
if(3DoF+_flag == 1 && interaction target == 3){  
   ClientPosition()  
   behavior_coefficient  
}  
}  
if(table_type == 1){  
   ClientPosition()  
   V3C_orientation()  
   last_processed_media_timestamp  
}  
if(table_type == 2){  
   zoom_ratio  
}  
if(table_type == 3){  
   event_label  
   event_trigger_flag  
   reserved  
}  
}  
}
``` |

table_ type shown in Table 8 is the information type field and is used for representing the information type carried in the interaction signaling table. For the semantics of other fields, a reference may be made to Table 1 and Table 2 in the embodiment corresponding to FIG. 3 above, which will not be repeated here. In some embodiments, for the value of table_type, a reference may be made to Table 9, which is used for indicating a value table of an information type field according to an embodiment of this application.

**Table 9**

| Value | Description |
|---|---|
| 0 | Panoramic video user position change information |
| 1 | Volumetric video user position change information |
| 2 | Picture zooming information |
| 3 | Interaction event trigger information |
| 4...255 | Undefined |

It can be seen from Table 9 that the field value of the information type field may be a first field value (for example, 2), a second field value (for example, 3), a third field value (for example, 0), a fourth field value (for example, 1), etc. In Table 9, the panoramic video user position change information is position change information described by a first type position field, the volumetric video user position change information is position change information described by a second type position field, the picture zooming information is zooming ratio in executing a zooming event, and the interaction event trigger information includes an event label and an event status of the switching event. Other valued information may be added in the future.

It is to be understood that based on Table 1, Table 2 or Table 8 above, the interaction feedback message generated in the embodiment of this application can support more interaction feedback scenarios. Please also refer to Table 10, which is used for indicating the syntax of an interaction feedback message according to an embodiment of this application.

**Table 10**

| |
|---|
| ```
interaction_feedback_message() {  
message_id  
version  
length
``` |
| ```
extension{  
   number_of_tables  
   for(i=0; i<N1; i++){  
    table_id  
    table_version  
    table_length  
   }  
message_payload {  
   message_source  
   asset_group_flag  
reserved  
   if(asset_group_flag) {  
    asset_group_id  
   }else{  
    asset_id()  
   }  
   for (i=0; i<N1; i++) {  
    table()  
   }  
}  
}
``` |

The semantics of the syntax shown in Table 10 above are as follows: message_id indicates the identifier of the interaction feedback message, version indicates the version of the interaction feedback message. The information carried by the new version will overwrite any previous old version. length indicates the length of the interaction feedback message in bytes, that is, the length from the next field to the last byte of the interaction feedback message. Value "0" is invalid in this field. number_of_tables is the signaling table number field, and indicates the number of interaction signaling tables contained in the interaction feedback message. Here, N1 is used. The value of N1 is not limited in the embodiment of this application. table_id is the signaling table identity field, and indicates the identifier of each of the interaction signaling tables contained in the interaction feedback message. This is a copy of the table_id field of the interaction signaling table contained in the payload of the interaction feedback message. table_version is the signaling table version field, and indicates the version number of each of the interaction signaling tables contained in the interaction feedback message. This is a copy of the version field of the interaction signaling table contained in the payload of the interaction feedback message. table_length is the signaling table length field, and indicates the length of each of the interaction signaling tables contained in the interaction feedback message. This is a copy of the length field of the interaction signaling table contained in the payload of the interaction feedback message. message_source indicates the message source. 0 represents that the interaction feedback message is transmitted from the video client to the server. 1 represents that the interaction feedback message is transmitted from the server to the video client. This value is set to 0 here. asset_group_flag is the asset group attribute field, and is used for representing the dependency relationship between the first immersive media content and the immersive media content set contained in the target asset group. For example, when the field value of the asset group attribute field is a first attribute field value (for example, 1), the asset group attribute field with the first attribute field value is used for representing that the first immersive media content belongs to the immersive media content set. When the field value of the asset group attribute field is a second attribute field value (for example, 0), the asset group attribute field with the second attribute field value is used for representing that the first immersive media content does not belong to the immersive media content set, that is, the value of asset_group_flag being 1 represents that the content (i.e., the first immersive media content) currently consumed by the video client belongs to an asset group (such as the target asset group), and the value being 0 represents that the content currently consumed by the video client does not belong to any asset group. The asset group refers to a collection of a plurality of immersive media contents. The immersive video in the embodiment of this application may include a plurality of immersive media contents (such as first immersive media content). The plurality of immersive media contents may be subdivided by asset group as required. For example, the immersive video itself may be used as an asset group, that is, all immersive media contents in the immersive video belong to an asset group. Alternatively, the immersive video may be divided into a plurality of asset groups, and each asset group may include a plurality of immersive media contents in the immersive video. asset_group_id is the asset group identity field, and indicates the identifier of the asset group of the content currently consumed by the video client, that is, the identifier of the asset group (such as target asset group) corresponding to the immersive media content set to which the first immersive media content belongs. asset_id indicates the identifier of the content currently consumed by the video client. It is to be understood that each immersive media content has a unique corresponding asset_id; when the first immersive media content belongs to a certain asset group, the number of the first immersive media contents currently consumed by the video client may be more than one; in this case, it is obviously not appropriate to feed back asset_id of one of the first immersive media content, so the identifier of the asset group to which the first immersive media content belongs may be fed back. table() is the interaction signaling table entity. The interaction signaling table in the payload and table_id in the extended domain appear in the same order. An interaction signaling table may be used as an instance of table(). The interaction signaling tables may be ordered according to the corresponding operation timestamp, according to table_id corresponding to the interaction signaling tables, or according to any other sorting method, which is not limited in the embodiment of this application. It can be seen that the interaction feedback message shown in Table 10 adopts loop statements, so the business events carried in one or more interaction signaling tables contained in the interaction feedback message can be fed back in order. That is to say, when the interaction feedback message contains a plurality of interaction signaling tables, the server will read each of the interaction signaling tables in turn according to the order of the interaction signaling tables presented in the loop statements.

The signaling table number field, the signaling table identity field, the signaling table version field, the signaling table length field, the asset group attribute field and the asset group identity field all are extended description fields newly added to the system layer of the video client.

Accordingly, it can be seen that the embodiment of this application redefines and reorganizes the interaction feedback message on the basis of the existing technology, and adds two types of feedback information, i.e., zooming and event triggering, to the type of interaction feedback to support more interaction feedback scenarios, thus improving the accuracy of the media content acquired by the video client in the interaction feedback process.

In step S204, the interaction feedback message is transmitted to a server so that the server extracts the interaction signaling table, determines the business event indicated by the interaction operation according to the information type field in the interaction signaling table and acquires a second immersive media content used for responding to the interaction operation based on the business event indicated by the interaction operation.

Exemplarily, the video client may transmit the interaction feedback message to the server. After receiving the interaction feedback message, the server may extract the interaction signaling table from the interaction feedback message in sequence, read the information type field from the extracted interaction signaling table, and then determine the business event indicated by the interaction operation according to the information type field. Finally, the server may acquire a second immersive media content used for responding to the interaction operation from the immersive video based on the business event indicated by the interaction operation, and return the second immersive media content to the video client. For example, when the field value of the information type field is a first field value, a zooming ratio corresponding to a zooming event may be acquired as the business event. When the field value of the information type field is a second field value, an event label and an event status corresponding to a switching event may be acquired as the business event. When the field value of the information type field is a third field value, the position change information of the business object viewing the first immersive media content that belongs to a panoramic video may be acquired as the business event. When the field value of the information type field is a fourth field value, the position change information of the business object viewing the first immersive media content that belongs to a volumetric video may be acquired as the business event.

In step S205, the second immersive media content returned by the server is received and the second immersive media content is played back in the video playback interface.

Exemplarily, since what the server returns is actually a second media file asset corresponding to the second immersive media content in the immersive video, the video client may receive the second media file asset returned by the server, unpack and decode the second media file asset, obtain the playable second immersive media content, and play back it in a video playback interface of the video client.

Accordingly, it can be seen that in the process of interaction between the video client and the server, the video client may feed back business events indicated by different types of interaction operations to the server. It is to be understood that the interaction operation here can not only include operations related to the user position (for example, user position change), but also include other operations aiming at the immersive media content (for example, zooming operation) currently played-back by the video client. Therefore, through the business key field carried in the interaction feedback message, the video client can feed back types of business events to the server. In this way, the server can determine the immersive media content in response to the interaction operation based on these different types of business events, rather than relying on the user position information only, thus enriching the type of the interaction feedback message and improving the accuracy of the media content acquired by the video client in the interaction feedback process.

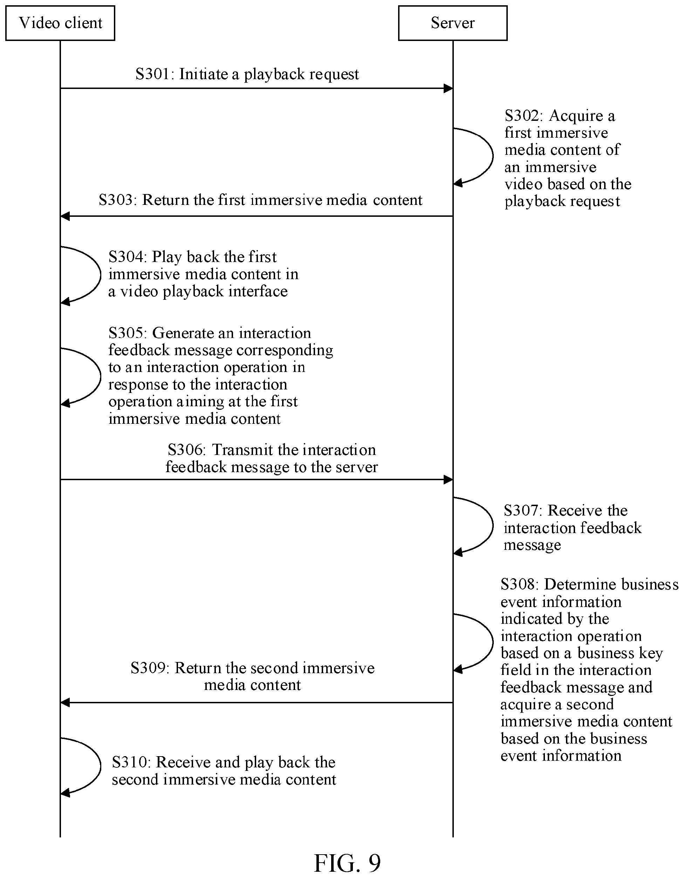

In some embodiments, please refer to FIG. 9, which is a schematic interaction diagram of a method for processing immersive media data according to an embodiment of this application. This method may be performed jointly by a decoding device and a coding device in the immersive media system (for example, panoramic video system or volumetric video system). The decoding device may be the decoding device 100B in the embodiment corresponding to FIG. 1 above, or the decoding device 200B in the embodiment corresponding to FIG. 3 above. The coding device may be the decoding device 100A in the embodiment corresponding to FIG. 1 above or the decoding device 200A in the embodiment corresponding to FIG. 3 above. The decoding device may be a user terminal integrated with a video client. The coding device may be a server. The method may at least include the following steps.

In step S301, a video client initiates a playback request to a server.

For the specific implementation of this step, a reference may be made to step S201 in the embodiment corresponding to FIG. 8 above, which will not be repeated here.

In step S302, the server acquires a first immersive media content of an immersive video based on the playback request.

Exemplarily, the server may acquire an immersive media content matching with a target content identifier from an immersive video as a first immersive media content based on the target content identifier (i.e., target asset_id) carried in the playback request. In some embodiments, the server may also acquire the immersive media content matching with the object position information from the immersive video as the first immersive media content based on the current object position information of the business object carried in the playback request.

In step S303, the server returns the first immersive media content to the video client.

In step S304, the video client plays back the first immersive media content in a video playback interface.

In step S305, the video client generates an interaction feedback message corresponding to an interaction operation in response to the interaction operation aiming at the first immersive media content.

For the specific implementation of this step, a reference may be made to step S101 in the embodiment corresponding to FIG. 7 above or step S203 in the embodiment corresponding to FIG. 8 above, which will not be repeated here.

In step S306, the video client transmits the interaction feedback message to the server.

In step S307, the server receives the interaction feedback message transmitted by the video client.

In step S308, the server determines a business event indicated by the interaction operation based on a business key field in the interaction feedback message and acquires a second immersive media content used for responding to the interaction operation based on the business event indicated by the interaction operation.

Exemplarily, after receiving the interaction feedback message, the server may determine the business event indicated by the interaction operation based on the business key field in the interaction feedback message, and acquire a second immersive media content used for responding to the interaction operation from the immersive video based on the business event indicated by the interaction operation. It is to be understood that when the interaction feedback message is represented in the form of the interaction signaling table, the business key field in the interaction feedback message is an information type field added to the interaction signaling table. When the interaction feedback message is not represented in the form of the interaction signaling table, the business key field is directly added to the interaction feedback message.

It is to be understood that when the first immersive media content belongs to an immersive media content set contained in a target asset group, the finally acquired second immersive media content may belong to the same immersive media content set, or the second immersive media content may belong to an immersive media content set contained in other asset groups, or the second immersive media content may not belong to an immersive media content set contained in any asset group, which is not limited in the embodiment of this application.

In step S309, the server returns the second immersive media content to the video client.

In step S310, the video client receives the second immersive media content returned by the server and plays back the second immersive media content in the video playback interface.

To facilitate understanding, description will be made simply by taking an immersive video T as an example. Supposing that the video client requests the immersive video T from the server. After the server receives the request (for example, a playback request), it may transmit an immersive media content T1 (i.e., first immersive media content) in the immersive video T to the video client based on the request. After receiving the immersive media content T1, the video client may play back the immersive media content T1 in the corresponding video playback interface, and the business object (for example, user 1) starts to consume the immersive media content T1, and may generate an interaction behavior in the consumption process (that is, perform an interaction operation aiming at the immersive media content T1), so that the video client can generate an interaction feedback message corresponding to the interaction behavior and transmit it to the server. In some embodiments, the server receives the interaction feedback message transmitted by the video client. According to the content (for example, business key field) of the interaction feedback message, it may select other immersive media content (i.e., second immersive media content, for example, immersive media content T2) from the immersive video T and transmit it to the video client, so that the business object can experience the new immersive media content. For example, supposing that user 1 performs a zooming operation on the immersive media content T1, such as enlarging the content of the immersive content T1, and the corresponding zooming ratio is 3 times, the server may select an immersive media content with higher color precision (for example, immersive media content T2) from the immersive video T based on the zooming ratio indicated by the zooming operation and transmit it to user 1. For another example, supposing that user 1 performs a content switching operation on the immersive media content T1, the server may select an immersive media content (for example, immersive media content T3) corresponding to the replacement version of content from the immersive video T and transmit it to user 1 based on the content switching operation.

Accordingly, it can be seen that the embodiment of this application reorganizes and redefines the interaction feedback message on the basis of the existing technology, and adds two types of feedback information, i.e., zooming and switching (or event triggering), to the type of interaction feedback to support more interaction feedback scenarios, thus improving the accuracy of the media content acquired by the video client in the interaction feedback process.

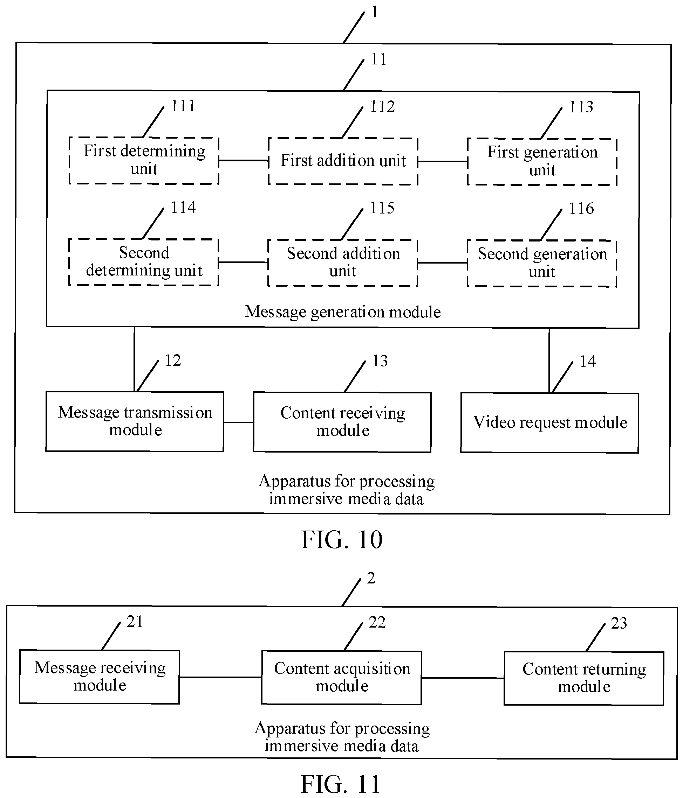

Please refer to FIG. 10, which is a schematic structural diagram of an apparatus for processing immersive media data according to an embodiment of this application. The apparatus for processing immersive media data may be a computer program (including program code) running in a decoding device. For example, the apparatus for processing immersive media data may be application software in the decoding device. The apparatus for processing immersive media data can be used for executing the corresponding steps in the method for processing immersive media data according to the embodiment of this application. In some embodiments, referring to FIG. 10, the apparatus 1 for processing immersive media data may include a message generation module 11, a message transmitting module 12 and a content receiving module 13.

The message generation module 11 is configured to generate an interaction feedback message corresponding to an interaction operation in response to the interaction operation aiming at a first immersive media content. The interaction feedback message carries a business key field used for describing a business event indicated by the interaction operation.

The message transmitting module 12 is configured to transmit the interaction feedback message. The interaction feedback message is used for determining the business event indicated by the interaction operation, and acquiring a second immersive media content used for responding to the interaction operation based on the business event.

The content receiving module 13 is configured to receive the second immersive media content returned.

For the specific implementations of the message generation module 11, the message transmitting module 12 and the content receiving module 13, a reference may be made to step S101 to step S103 in the embodiment corresponding to FIG. 7 above or step S203 to step S205 in the embodiment corresponding to FIG. 8 above, which will not be repeated here. In addition, the description of beneficial effects of the same method are not described herein again.

In some embodiments, referring to FIG. 10, the apparatus 1 for processing immersive media data may further include a video request module 14.

The video request module 14is configured to generate a playback request corresponding to a video playback operation in response to the video playback operation aiming at an immersive video, and transmit the playback request.

The playback request is used for requesting for acquiring the first immersive media content of the immersive video; receiving the first immersive media content returned and playing back the first immersive media content.

For the specific implementation of the video request module 14, a reference may be made to step S201 to step S202 in the embodiment corresponding to FIG. 8 above, which will not be repeated here.

The business key field includes at least one of a first key field, a second key field, a third key field and a fourth key field. The first key field is used for representing a zooming ratio in executing a zooming event indicated by a zooming operation when the interaction operation includes the zooming operation. The second key field is used for representing an event label and event status corresponding to a switching event indicated by a switching operation when the interaction operation includes the switching operation. The third key field is used for representing first object position information of a business object viewing the first immersive media content that belongs to a panoramic video when the interaction operation includes a first position interaction operation. The fourth key field is used for representing second object position information of the business object viewing the first immersive media content that belongs to a volumetric video when the interaction operation includes a second position interaction operation.

In some embodiments, referring to FIG. 10, the message generation module 11 may include a first determination unit 111, a first addition unit 112, a first generation unit 113, a second determination unit 114, a second addition unit 115, and a second generation unit 116.

The first determination unit 111 is configured to determine a first information type field of a business event indicated by a triggering operation in response to the triggering operation aiming at the first immersive media content, and record an operation timestamp of the triggering operation.

The first addition unit 112 is configured to add the first information type field and the operation timestamp to an interaction signaling table associated with the first immersive media content, and use the first information type field added to the interaction signaling table as the business key field used for describing the business event indicated by the interaction operation.

The first generation unit 113 is configured to generate an interaction feedback message corresponding to the triggering operation based on the business key field and the operation timestamp in the interaction signaling table.

A business event indicated by a zooming operation is a zooming event when the triggering operation includes the zooming operation, and a field mapped by the first information type field with a first field value is used for representing a zooming ratio in executing the zooming event when a field value of the first information type field corresponding to the zooming operation is the first field value.

A business event indicated by a switching operation is a switching event when the triggering operation includes the switching operation, and a field mapped by the first information type field with a second field value is used for representing an event label and event status of the switching event when a field value of the first information type field corresponding to the switching operation is the second field value.

The event status with a first status value is used for representing that the switching event is in an event trigger status when a status value of the event status is the first status value. The event status with a second status value is used for representing that the switching event is in an event end status when a status value of the event status is the second status value.

The second determination unit 114 is configured to determine a position interaction operation aiming at object position information as the interaction operation aiming at the first immersive media content when the object position information of the business object viewing the first immersive media content is detected; determine a second information type field of the business event indicated by the interaction operation and record an operation timestamp of the interaction operation.

The second addition unit 115 is configured to add the second information type field and the operation timestamp to an interaction signaling table associated with the first immersive media content, and use the second information type field added to the interaction signaling table as the business key field used for describing the business event indicated by the interaction operation.

The second generation unit 116 is configured to generate an interaction feedback message corresponding to the interaction operation based on the business key field and the operation timestamp in the interaction signaling table.

A first type position field is used for describing position change information of the business object viewing the first immersive media content that belongs to a panoramic video when the first immersive media content is an immersive media content in an immersive video, the immersive video is a panoramic video, a field value of the second information type field corresponding to the object position information is a third field value and the second information type field with the third field value includes the first type position field.

A second type position field is used for describing position change information of the business object viewing the first immersive media content that belongs to a volumetric video when the first immersive media content is an immersive media content in an immersive video, the immersive video is a volumetric video, a field value of the second information type field corresponding to the object position information is a fourth field value and the second information type field with the fourth field value includes the second type position field.

The interaction feedback message further includes an extended description field. The extended description field may be an extended description field newly added to the system layer of the video client. The extended description field includes at least one of a signaling table number field, a signaling table identity field, a signaling table version field and a signaling table length field. The signaling table number field is used for representing a total number of interaction signaling tables contained in the interaction feedback message. The signaling table identity field is used for representing an identifier of each of the interaction signaling tables contained in the interaction feedback message. The signaling table version field is used for representing a version number of each of the interaction signaling tables. The signaling table length field is used for representing a length of each of the interaction signaling tables.

The interaction feedback message further includes an asset group attribute field and an asset group identity field. The asset group attribute field is used for representing a dependency relationship between the first immersive media content and an immersive media content set contained in a target asset group. The asset group identity field is used for representing an identifier of the target asset group.

The asset group attribute field with a first attribute field value is used for representing that the first immersive media content belongs to the immersive media content set when a field value of the asset group attribute field is the first attribute field value. The asset group attribute field with a second attribute field value is used for representing that the first immersive media content does not belong to the immersive media content set when a field value of the asset group attribute field is the second attribute field value.

For the specific implementation of the video request module 14, a reference may be made to step S101 in the embodiment corresponding to FIG. 7 above, which will not be repeated here.

Please refer to FIG. 11, which is a schematic structural diagram of an apparatus for processing immersive media data according to an embodiment of this application. The apparatus for processing immersive media data may be a computer program (including program code) running in a coding device. For example, the apparatus for processing immersive media data may be application software in the coding device. The apparatus for processing immersive media data can be used for executing the corresponding steps in the method for processing immersive media data provided by the embodiment of this application. In some embodiments, referring to FIG. 11, the apparatus 2 for processing immersive media data may include a message receiving module 21, a content acquisition module 22 and a content returning module 23.

The message receiving module 21 is configured to receive an interaction feedback message. The interaction feedback message is generated in response to an interaction operation aiming at a first immersive media content. The interaction feedback message carries a business key field used for describing a business event indicated by the interaction operation.

The content acquisition module 22 is configured to determine the business event indicated by the interaction operation based on the business key field in the interaction feedback message, and acquire a second immersive media content used for responding to the interaction operation based on the business event indicated by the interaction operation.

The content returning module 23is configured to return the second immersive media content.

For the specific implementations of the message receiving module 21, the content acquisition module 22 and the content returning module 23, a reference may be made to step S307 to step S309 in the embodiment corresponding to FIG. 9 above, which will not be repeated here. In addition, the description of beneficial effects of the same method are not described herein again.

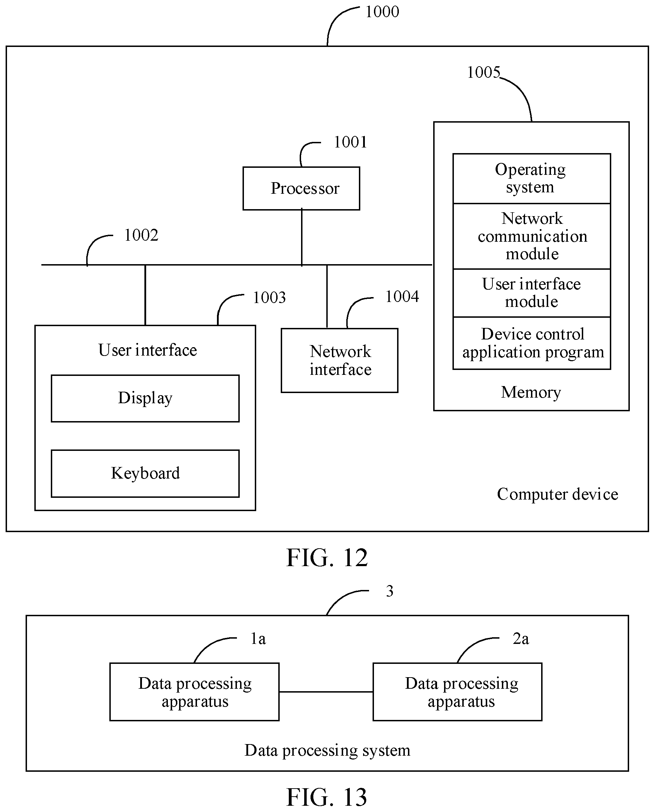

Referring to FIG. 12, which is a schematic structural diagram of a computer device according to an embodiment of this application. Referring to FIG. 12, the computer device 1000 may include a processor 1001, a network interface 1004 and a memory 1005. In addition, the computer device 1000 may further include a user interface 1003 and at least one communication bus 1002. The communications bus 1002 is configured to implement connection and communication between the components. The user interface 1003 may include a display and a keyboard. Optionally, the user interface 1003 may further include a standard wired interface and wireless interface. The network interface 1004 may include a standard wired interface and a standard wireless interface (such as a Wi-Fi interface). The memory 1004 may be a high-speed RAM memory, or a non-volatile memory, for example, at least one magnetic disk memory. The memory 1005 may also be at least one storage apparatus located away from the processor 1001. Referring to FIG. 12, the memory 1005 used as a computer storage medium may include an operating system, a network communications module, a user interface module, and a device control application program.

In the computer device 1000 illustrated in FIG. 12, the network interface 1004 can provide a network communication function. The user interface 1003 is mainly configured to provide an input interface for the user. The processor 1001 can be used for calling the device control application stored in the memory 1005 to execute the description of the method for processing immersive media data in the embodiment corresponding to any one of FIG. 7, FIG. 8 and FIG. 9 above, the description of the apparatus 1 for processing immersive media data in the embodiment corresponding to FIG. 10 above, and the description of the apparatus 2 for processing immersive media data in the embodiment corresponding to FIG. 11 above, which will not be repeated here. Details are not described herein again. In addition, the description of beneficial effects of the same method are not described herein again.

In addition, an embodiment of this application further provides a computer-readable storage medium in which the computer program executed by the apparatus 1 for processing immersive media data or the apparatus 2 for processing immersive media data above is stored. The computer program includes program instructions. When the processor executes the program instructions, it can execute the description of the method for processing immersive media data in the embodiment corresponding to any one of FIG. 7, FIG. 8 and FIG. 9 above, which will not be repeated here. In addition, the description of beneficial effects of the same method are not described herein again. For technical details that are not disclosed in the computer-readable storage medium embodiment of this application, refer to the descriptions of the method embodiments of this application.

The computer-readable storage medium may be the apparatus for processing immersive media data according to any one of the embodiments or an internal storage unit of the computer device, such as a hard disk or an internal memory of the computer device. The computer-readable storage medium may also be an external storage device of the computer device, such as a plug-in hard disk, a Smart Media Card (SMC), a Secure Digital (SD) card or a flash card equipped on the computer device. In some embodiments, the computer-readable storage medium may also include both the internal storage unit and the external storage device of the computer device. The computer-readable storage medium is used for storing the computer program and other programs and data required by the computer device. The computer-readable storage medium may also be used for temporarily storing data that have been output or will be output.

In addition, an embodiment of this application further provides a computer program product or a computer program. The computer program product or the computer program includes computer instructions. The computer instructions are stored in a computer-readable storage medium. The processor of the computer device reads the computer instructions from the computer-readable storage medium and the processor executes the computer instructions to enable the computer device to execute the method according to the embodiment corresponding to any one of FIG. 7, FIG. 8 and FIG. 9. In addition, the description of beneficial effects of the same method are not described herein again. For technical details that are not disclosed in the computer program product or computer program embodiment of this application, refer to the descriptions of the method embodiments of this application.

In some embodiments, please refer to FIG. 13, which is a schematic structural diagram of a data processing system according to an embodiment of this application. The data processing system 3 may include a data processing apparatus 1a and a data processing apparatus 2a. The data processing apparatus 1a may be the apparatus 1 for processing immersive media data in the embodiment corresponding to FIG. 10 above. It is to be understood that the data processing apparatus 1a may be integrated intothe decoding device 100B in the embodiment corresponding to FIG. 1 above or the decoding device 200B in the embodiment corresponding to FIG. 3 above, which will not be repeated here. The data processing apparatus 2a may be the apparatus 2 for processing immersive media data in the embodiment corresponding to FIG. 11 above. It is to be understood that the data processing apparatus 2a may be integrated into the coding device 100A in the embodiment corresponding to FIG. 1 above or the coding device 200A in the embodiment corresponding to FIG. 3 above, which will not be repeated here. In addition, the description of beneficial effects of the same method are not described herein again. For technical details that are not disclosed in the data processing system embodiment of this application, refer to the descriptions of the method embodiments of this application.

Terms such as "first" and "second" in the description, claims and accompanying drawings of this application are used for distinguishing different objects, instead of describing a specific order. In addition, the terms "include" and any variant thereof are intended to cover a non-exclusive inclusion. For example, a process, method, apparatus, product, or device that includes a series of steps or units is not limited to the listed steps or units; and instead, further optionally includes a step or unit that is not listed, or further optionally includes another step or unit that is intrinsic to the process, method, apparatus, product, or device.

A person skilled in the art may understand that, units and algorithm steps of the examples described in the foregoing disclosed embodiments may be implemented by electronic hardware, computer software, or a combination thereof. To clearly describe the interchangeability between the hardware and the software, the foregoing has generally described compositions and steps of each example based on functions. Whether the functions are executed by means of hardware or software depends on particular applications and design constraint conditions of the technical solutions. A person skilled in the art may use different methods to implement the described functions for each particular application, but it is not considered that the implementation goes beyond the scope of this application.

What is disclosed above is merely exemplary embodiments of this application, and certainly is not intended to limit the scope of the claims of this application. Therefore, equivalent variations made in accordance with the claims of this application shall still fall within the scope of this application.

## Claims

1. A method for processing immersive media data, comprising:
generating an interaction feedback message corresponding to an interaction operation in response to the interaction operation aiming at a first immersive media content, the interaction feedback message carrying a business key field describing a business event indicated by the interaction operation;
transmitting the interaction feedback message to determine the business event indicated by the interaction operation using the interaction feedback message, and acquire a second immersive media content used for responding to the interaction operation based on the business event; and
receiving the second immersive media content returned.

2. The method according to claim 1, wherein the method further comprises:
in response to a video playback operation aiming at an immersive video, generating a playback request corresponding to the video playback operation for acquiring the first immersive media content of the immersive video and transmitting the playback request; and
receiving the first immersive media content returned and playing back the first immersive media content.

3. The method according to any one of claims 1 to 2, wherein the business key field comprises at least one of a first key field, a second key field, a third key field and a fourth key field, wherein
the first key field is used for representing a zooming ratio in executing a zooming event indicated by a zooming operation when the interaction operation comprises the zooming operation;
the second key field is used for representing an event label and event status corresponding to a switching event indicated by a switching operation when the interaction operation comprises the switching operation;
the third key field is used for representing first object position information of a business object viewing the first immersive media content that belongs to a panoramic video when the interaction operation comprises a first position interaction operation; and
the fourth key field is used for representing second object position information of the business object viewing the first immersive media content that belongs to a volumetric video when the interaction operation comprises a second position interaction operation.

4. The method according to any one of claims 1 to 2, wherein the generating an interaction feedback message corresponding to an interaction operation in response to the interaction operation aiming at a first immersive media content comprises:
determining a first information type field of a business event indicated by a triggering operation in response to the triggering operation aiming at the first immersive media content, and recording an operation timestamp of the triggering operation;
adding the first information type field and the operation timestamp to an interaction signaling table associated with the first immersive media content, and using the first information type field added to the interaction signaling table as the business key field; and
generating the interaction feedback message corresponding to the triggering operation based on the business key field and the operation timestamp in the interaction signaling table.

5. The method according to claim 4, wherein a business event indicated by a zooming operation is a zooming event when the triggering operation comprises the zooming operation, and a field mapped by the first information type field with a first field value is used for representing a zooming ratio in executing the zooming event when a field value of the first information type field corresponding to the zooming operation is the first field value.

6. The method according to claim 4, wherein a business event indicated by a switching operation is a switching event when the triggering operation comprises the switching operation, and a field mapped by the first information type field with a second field value is used for representing an event label and event status of the switching event when a field value of the first information type field corresponding to the switching operation is the second field value.

7. The method according to claim 6, wherein the event status with a first status value is used for representing that the switching event is in an event trigger status when a status value of the event status is the first status value; and the event status with a second status value is used for representing that the switching event is in an event end status when a status value of the event status is the second status value.

8. The method according to any one of claims 1 to 2, wherein the generating an interaction feedback message corresponding to an interaction operation in response to the interaction operation aiming at a first immersive media content comprises:
determining a position interaction operation aiming at object position information as the interaction operation aiming at the first immersive media content when the object position information of the business object viewing the first immersive media content is detected;
determining a second information type field of the business event indicated by the interaction operation and recording an operation timestamp of the interaction operation;
adding the second information type field and the operation timestamp to an interaction signaling table associated with the first immersive media content, and using the second information type field added to the interaction signaling table as the business key field; and
generating the interaction feedback message corresponding to the interaction operation based on the business key field and the operation timestamp in the interaction signaling table.

9. The method according to claim 8, wherein a first type position field is used for describing position change information of the business object viewing the first immersive media content when the first immersive media content is an immersive media content in an immersive video, the immersive video is a panoramic video, a field value of the second information type field corresponding to the object position information is a third field value and the second information type field with the third field value comprises the first type position field.

10. The method according to claim 8, wherein a second type position field is used for describing position change information of the business object viewing the first immersive media content when the first immersive media content is an immersive media content in an immersive video, the immersive video is a volumetric video, a field value of the second information type field corresponding to the object position information is a fourth field value and the second information type field with the fourth field value comprises the second type position field.

11. The method according to any one of claims 1 to 2, wherein the interaction feedback message further comprises an extended description field; the extended description field comprises at least one of a signaling table number field, a signaling table identity field, a signaling table version field and a signaling table length field, wherein
the signaling table number field is used for representing a total number of interaction signaling tables contained in the interaction feedback message;
the signaling table identity field is used for representing an identifier of each of the interaction signaling tables contained in the interaction feedback message;
the signaling table version field is used for representing a version number of each of the interaction signaling tables; and
the signaling table length field is used for representing a length of each of the interaction signaling tables.

12. The method according to any one of claims 1 to 2, wherein the interaction feedback message further comprises an asset group attribute field and an asset group identity field, wherein the asset group attribute field is used for representing a dependency relationship between the first immersive media content and an immersive media content set contained in a target asset group; and the asset group identity field is used for representing an identifier of the target asset group.

13. The method according to claim 12, wherein the asset group attribute field with a first attribute field value is used for representing that the first immersive media content belongs to the immersive media content set when a field value of the asset group attribute field is the first attribute field value; and the asset group attribute field with a second attribute field value is used for representing that the first immersive media content does not belong to the immersive media content set when a field value of the asset group attribute field is the second attribute field value.

14. A method for processing immersive media data, comprising:
receiving an interaction feedback message, the interaction feedback message being generated in response to an interaction operation aiming at a first immersive media content, the interaction feedback message carrying a business key field describing a business event indicated by the interaction operation;
determining the business event indicated by the interaction operation based on the business key field in the interaction feedback message, and acquiring a second immersive media content used for responding to the interaction operation based on the business event; and
returning the second immersive media content.

15. An apparatus for processing immersive media data, comprising:
a message generation module, configured to generate an interaction feedback message corresponding to an interaction operation in response to the interaction operation aiming at a first immersive media content, the interaction feedback message carrying a business key field describing a business event indicated by the interaction operation;
a message transmitting module, configured to transmit the interaction feedback message to determine the business event indicated by the interaction operation using the interaction feedback message, and acquire a second immersive media content used for responding to the interaction operation based on the business event; and
a content receiving module, configured to receive the second immersive media content returned.

16. An apparatus for processing immersive media data, comprising:
a message receiving module, configured to receive an interaction feedback message, the interaction feedback message being generated in response to an interaction operation aiming at a first immersive media content, the interaction feedback message carrying a business key field describing a business event indicated by the interaction operation;
a content acquisition module, configured to determine the business event indicated by the interaction operation based on the business key field in the interaction feedback message, and acquire a second immersive media content used for responding to the interaction operation based on the business event; and
a content returning module, configured to return the second immersive media content.

17. A computer device, comprising: a processor and a memory,
the processor being connected to the memory, the memory being configured to store a computer program, and the processor being configured to call the computer program to enable the computer device to execute the method according to any one of claims 1 to 14.

18. A computer-readable storage medium, the computer-readable storage medium storing a computer program, the computer program being adapted to be loaded and executed by a processor to enable a computer device with the processor to execute the method according to any one of claims 1 to 14.

19. A computer program product, the computer program product comprising computer instructions, the computer instructions being stored in a computer-readable storage medium, the computer instructions being adapted to be read and executed by a processor to enable a computer device with the processor to execute the method according to any one of claims 1 to 14.
